# EUROPEAN PATENT APPLICATION

(11) **EP 4 358 555 A1**
(43) Date of publication of application: **24.04.2024**
(21) Application number: 22836914.6
(22) Date of filing: 05.07.2022
(51) Int. Cl.: H04W 8/14

(54) **METHOD FOR SENDING APPLICATION CONTEXT RELOCATION INFORMATION, AND APPARATUS**

(30) Priority: 07.07.2021 CN 202110770854; 19.08.2021 CN 202110957238
(71) Applicant: Huawei Technologies Co., Ltd., Shenzhen, Guangdong 518129 (CN)
(72) Inventor: HU, Yajie, Shenzhen, Guangdong 518129 (CN); YANG, Yanmei, Shenzhen, Guangdong 518129 (CN); GE, Cuili, Shenzhen, Guangdong 518129 (CN)
(74) Representative: Gill Jennings & Every LLP
(86) International application number: PCT/CN2022/103949
(87) International publication number: WO 2023/280165

(57) **Abstract**

This application provides a method for sending application context relocation ACR information and an apparatus. The method includes: An edge application server EAS receives first information from an edge enabler server EES, where the first information indicates whether ACR information is allowed to be sent by using an enabler layer. The EAS determines, based on at least the first information, a manner of sending the ACR information. The EAS sends the ACR information in the manner of sending the ACR information. According to the solution of this application, the manner of sending the ACR information by the EAS is associated with whether an EEC subscribes to the ACR information. Therefore, according to the method provided in this application, the EAS can send the ACR information in a correct manner, to ensure that the ACR information can be successfully sent to a terminal device.

## Description

This application claims priority to Chinese Patent Application No. 202110770854.8, filed with the China National Intellectual Property Administration on July 7, 2021 and entitled "METHOD FOR SENDING APPLICATION CONTEXT RELOCATION INFORMATION AND APPARATUS", and Chinese Patent Application No. 202110957238.3, filed with the China National Intellectual Property Administration on August 19, 2021 and entitled "METHOD FOR SENDING APPLICATION CONTEXT RELOCATION INFORMATION AND APPARATUS", which are incorporated herein by reference in their entireties.

### TECHNICAL FIELD

This application relates to the field of communication technologies, and more specifically, to a method for sending application context relocation information and an apparatus.

### BACKGROUND

In an application context relocation (application context relocation, ACR) process, ACR information is generated. Currently, an edge application server (edge application server, EAS) sends the ACR information in either of two manners: a manner of sending the ACR information by using an enabler layer and a manner of sending the ACR information by using an application layer. However, when the EAS sends the ACR information by using the enabler layer, a problem that the ACR information fails to be sent may occur, which leads to an ACR process failure. Therefore, how to ensure that the ACR information can be successfully sent is an urgent problem to be resolved.

### SUMMARY

This application provides a method for sending application context relocation information and an apparatus.

According to a first aspect, a method for sending application context relocation ACR information is provided. The method includes:
an edge application server EAS receives first information from an edge enabler server EES, where the first information is used by the EAS to determine a manner of sending ACR information; the EAS determines, based on at least the first information, the manner of sending the ACR information; and the EAS sends the ACR information in the manner of sending the ACR information.

In a possible implementation, the first information indicates whether the ACR information is allowed to be sent by using an enabler layer.

According to the solution of this application, when sending the ACR information, the EAS may determine, based on the first information, whether to send the ACR information by using an application layer or the enabler layer. According to a current method, when an EAS sends ACR information by using an enabler layer, an EEC may not subscribe to the ACR information from an EES. In this case, the EES does not send the ACR information to the EEC after receiving the ACR information from the EAS. As a result, the ACR information fails to be sent. Therefore, according to the solution of this application, the EAS can choose to send the ACR information by using the enabler layer only when an EEC subscribes to the ACR information from the EES, so that the ACR information can be sent in a correct manner, thereby avoiding a case in which the ACR information fails to be sent.

With reference to the first aspect, in some implementations of the first aspect, the first information is ACR subscription status information of the edge enabler client EEC. When the ACR subscription status information of the EEC indicates that the ACR information is subscribed to, the first information indicates that the ACR information is allowed to be sent by using the enabler layer. When the ACR subscription status information of the EEC indicates that the ACR information is not subscribed to, the first information indicates that the ACR information is not allowed to be sent by using the enabler layer.

According to the solution of this application, the ACR subscription status information of the EEC may be used to implicitly indicate whether to allow sending the ACR information by using the enabler layer.

With reference to the first aspect, in some implementations of the first aspect, that the EAS determines, based on at least the first information, the manner of sending the ACR information includes: When the first information indicates that the ACR information is not allowed to be sent by using the enabler layer, the EAS determines that the manner of sending the ACR information is performing sending by using the application layer. When the first information indicates that the ACR information is allowed to be sent by using the enabler layer, the EAS determines that the manner of sending the ACR information is performing sending by using the enabler layer.

With reference to the first aspect, in some implementations of the first aspect, the method further includes: The EAS determines whether to send the ACR information by using the enabling layer. When the EAS determines to send the ACR information by using the enabler layer, the EAS sends second information to the EES. The second information is used to request to send the ACR information by using the enabler layer.

With reference to the first aspect, in some implementations of the first aspect, the ACR information includes a first type of ACR information and a second type of ACR information. That the EAS determines, based on the first information, the manner of sending the ACR information includes:
when the first information indicates that the first type of ACR information is allowed to be sent by using the enabler layer, and the second type of ACR information is not allowed to be sent by using the enabler layer, the EAS determines that a manner of sending the first type of ACR information is performing sending by using the enabler layer, and a manner of sending the second type of ACR information is performing sending by using the application layer; or when the first information indicates that the first type of ACR information is not allowed to be sent by using the enabler layer, and the second type of ACR information is allowed to be sent by using the enabler layer, the EAS determines that a manner of sending the first type of ACR information is performing sending by using the application layer, and a manner of sending the second type of ACR information is performing sending by using the enabler layer.

With reference to the first aspect, in some implementations of the first aspect, when the EAS sends the ACR information by using the enabler layer, the method further includes: The EAS receives third information from the EES, where the third information indicates that the ACR information fails to be sent, or the third information indicates that the EEC fails to receive the ACR information, or the third information indicates the EAS to resend the ACR information by using the application layer; and the EAS resends, based on the third information, the ACR information by using the application layer.

According to the solution of this application, when the EAS fails to send the ACR information by using the enabler layer, the EAS may resend the ACR information by using the application layer, to further ensure that the ACR information can be successfully sent to a terminal device.

With reference to the first aspect, in some implementations of the first aspect, the method further includes:
the EAS sends a second request message to the EES, where the second request message is used to request and/or subscribe to subscription status information of the ACR information of the EEC, or is used to request and/or subscribe to the manner of sending the ACR information.

With reference to the first aspect, in some implementations of the first aspect, that the second request message is used to subscribe to subscription status information of the ACR information of the EEC, or is used to subscribe to the manner of sending the ACR information includes:
the second request message includes second information, where the second information is used to request and/or subscribe to the subscription status information of the ACR information of the EEC, or is used to request and/or subscribe to the manner of sending the ACR information. Alternatively, the second request message is associated with an ACR process.

According to a second aspect, a method for sending application context relocation ACR information is provided. The method includes: An edge enabler server EES determines ACR subscription status information of an edge enabler client EEC; and the EES sends first information to an edge application server EAS, where the first information is used by the EAS to determine a manner of sending ACR information.

In a possible implementation, the first information indicates whether the ACR information is allowed to be sent by using an enabler layer.

According to the solution of this application, before the ACR information is sent, the EES determines the ACR subscription status information of the EEC, and sends the first information to the EAS, so that the EAS can determine, based on the first information, whether to send the ACR information by using an application layer or the enabler layer. According to a current method, before ACR information is sent, an EES does not determine ACR subscription status information of an EEC. When an EAS sends the ACR information by using an enabler layer, the EEC may not subscribe to the ACR information from the EES. In this case, the EES does not send the ACR information to the EEC after receiving the ACR information from the EAS. As a result, the ACR information fails to be sent. Therefore, according to the solution of this application, whether the EAS sends the ACR information by using the application layer or the enabler layer is associated with a case in which the EEC subscribes to the ACR information, so that the EAS can send the ACR information in a correct manner, thereby avoiding a case in which the ACR information fails to be sent.

With reference to the second aspect, in some implementations of the second aspect, the first information is the ACR subscription status information of the edge enabler client EEC. When the ACR subscription status information of the EEC indicates that the ACR information is subscribed to, the first information indicates that the ACR information is allowed to be sent by using the enabler layer. When the ACR subscription status information of the EEC indicates that the ACR information is not subscribed to, the first information indicates that the ACR information is not allowed to be sent by using the enabler layer.

With reference to the second aspect, in some implementations of the second aspect, the method further includes:
the EES receives second information from the EAS, where the second information is used to request to send the ACR information by using the enabler layer.

With reference to the second aspect, in some implementations of the second aspect, when the ACR information is sent by using the enabler layer, the method further includes:
the EES determines whether the EEC successfully receives the ACR information;
when the EEC fails to receive the ACR information, the EES sends third information to the EAS, where the third information indicates that the ACR information fails to be sent, or the third information indicates that the EEC fails to receive the ACR information, or the third information indicates the EAS to resend the ACR information by using the application layer; and/or
when the EEC fails to receive the ACR information, the EES sends seventh information to the EEC, where the seventh information indicates the EEC to subscribe to the ACR information.

In a possible implementation, if the EEC successfully receives the ACR information, the EEC may send first indication information to the EES, where the first indication information indicates that the EEC has successfully received the ACR information. For example, the first indication information is ACK information. If the EES receives the first indication information, the EES determines that the EEC has successfully received the ACR information. If the EES does not receive the first indication information within a preset time interval, the EES determines that the EEC does not receive the ACR information.

According to the solution of this application, when the EAS fails to send the ACR information by using the enabler layer, the EES may send the third information to the EAS, so that the EAS may resend the ACR information by using the application layer; and/or the EES may send the seventh information to the EEC, where the seventh information indicates the EEC to subscribe to the ACR information. After the EEC subscribes to the ACR information based on the seventh information, the EES sends the ACR information to the EEC. The two manners ensure that the ACR information can be successfully sent to a terminal device.

With reference to the second aspect, in some implementations of the second aspect, the method further includes:
the EES receives a second request message from the EAS, where the second request message is used to request and/or subscribe to subscription status information of the ACR information of the EEC, or is used to request and/or subscribe to the manner of sending the ACR information.

With reference to the second aspect, in some implementations of the second aspect, that the second request message is used to request and/or subscribe to subscription status information of the ACR information of the EEC, or is used to request and/or subscribe to the manner of sending the ACR information includes:
the second request message includes second information, where the second information is used to request and/or subscribe to the subscription status information of the ACR information of the EEC, or is used to request and/or subscribe to the manner of sending the ACR information. Alternatively, the second request message is associated with an ACR process.

According to a third aspect, a method for sending application context relocation ACR information is provided. The method includes:
an edge application server EAS receives first information from an edge enabler server EES, where the first information is used by the EAS to determine a manner of sending ACR information;
the EAS determines, based on the first information, the manner of sending the ACR information; and
the EAS sends the ACR information in the manner of sending the ACR information.

With reference to the third aspect, in some implementations of the third aspect, the first information includes an identifier of a first application client AC, and the ACR information is ACR information of the first AC.

With reference to the third aspect, in some implementations of the third aspect, the first information includes ACR subscription status information of the first AC.

When the ACR subscription status information of the first AC is subscribed, a manner of sending the ACR information of the first AC is sending the ACR information by using an enabler layer.

Alternatively, when the ACR subscription status information of the first AC is non-subscribed, a manner of sending the ACR information of the first AC is sending the ACR information without using an enabler layer.

It should be understood that, that the ACR information is sent without using the enabler layer means that the ACR information is sent by using the application layer.

With reference to the third aspect, in some implementations of the third aspect,
when the first information indicates that the ACR information of the first AC is not allowed to be sent by using an enabler layer, the EAS determines that a manner of sending the ACR information of the first AC is performing sending without using the enabler layer; or
when the first information indicates that the ACR information of the first AC is allowed to be sent by using an enabler layer, the EAS determines that a manner of sending the ACR information of the first AC is performing sending by using the enabler layer.

With reference to the third aspect, in some implementations of the third aspect,
when the EAS sends the ACR information of the first AC by using the enabler layer, the method further includes:
the EAS receives third information from the EES, where the third information includes the identifier of the first AC, and the third information indicates that the ACR information of the first AC fails to be sent, or the third information indicates that an EEC fails to receive the ACR information of the first AC, or the third information indicates the EAS to send the ACR information of the first AC by using an application layer; and
the EAS sends, based on the third information, the ACR information of the first AC by using the application layer.

With reference to the third aspect, in some implementations of the third aspect,
when the EAS determines to send the ACR information of the first AC by using the enabler layer, the EAS sends a second request message to the EES, where the second request message includes the identifier of the first AC, and the second request message is used to request to send the ACR information of the first AC by using the enabler layer.

With reference to the third aspect, in some implementations of the third aspect,
the method further includes:
the EAS sends a second request message to the EES, where the second request message includes the identifier of the first AC, and the second request message is used to request and/or subscribe to subscription status information of the ACR information of the first AC, or is used to request and/or subscribe to the manner of sending the ACR information of the first AC.

With reference to the third aspect, in some implementations of the third aspect,
the first information indicates that a manner of sending the ACR information of the first AC is performing sending by using an enabler layer.

According to a fourth aspect, a method for sending application context relocation ACR information is provided. The method includes:
an edge enabler server EES determines ACR subscription status information of an edge enabler client EEC; and
the EES sends first information to an edge application server EAS based on the ACR subscription status information, where the first information is used by the EAS to determine a manner of sending ACR information.

With reference to the fourth aspect, in some implementations of the fourth aspect,
the ACR subscription status information is ACR subscription status information of a first AC, the first information includes an identifier of the first AC, and the ACR information is ACR information of the first AC.

With reference to the fourth aspect, in some implementations of the fourth aspect,
the first information includes the ACR subscription status information of the first AC; and
when the ACR subscription status information of the first AC is subscribed, the manner of sending the ACR information is performing sending by using an enabler layer; or
when the ACR subscription status information of the first AC is non-subscribed, the manner of sending the ACR information is performing sending without using an enabler layer.

With reference to the fourth aspect, in some implementations of the fourth aspect,
when the ACR information of the first AC is sent by using the enabler layer, the method further includes:
the EES determines whether the EEC successfully receives the ACR information of the first AC;
when the EEC fails to receive the ACR information of the first AC, the EES sends third information to the EAS, where the third information indicates that the ACR information of the first AC fails to be sent, or the third information indicates that the EEC fails to receive the ACR information of the first AC, or the third information indicates the EAS to resend the ACR information of the first AC by using an application layer; and/or
when the EEC fails to receive the ACR information of the first AC, the EES sends seventh information to the EEC, where the seventh information indicates the EEC to subscribe to the ACR information of the first AC.

With reference to the fourth aspect, in some implementations of the fourth aspect,
the method further includes:
the EES receives a second request message from the EAS, where the second request message includes the identifier of the first AC, and the second request message is used to request and/or subscribe to subscription status information of the ACR information of the first AC, or is used to request and/or subscribe to a manner of sending the ACR information of the first AC, or is used to request to send the ACR information of the first AC by using the enabler layer.

With reference to the fourth aspect, in some implementations of the fourth aspect,
before the ACR subscription status information of the first AC is determined, the method further includes:
the EES receives a first request message from the EEC, where the first request message is used to subscribe to the ACR information of the first AC.

That the EES determines the ACR subscription status information of the first AC includes:
the EES determines, based on the first request message, that the ACR subscription status information of the first AC is subscribed, where the first information indicates that a manner of sending the ACR information of the first AC is performing sending by using an enabler layer.

According to a fifth aspect, a method for sending application context relocation ACR information is provided. The method includes:
an edge enabler server EES determines ACR subscription status information of an edge enabler client EEC; and
the EES determines, based on the ACR subscription status information of the EEC, whether to send ACR information by using an enabler layer.

With reference to the fifth aspect, in some implementations of the fifth aspect, the ACR subscription status information is ACR subscription status information of a first AC, the ACR information is ACR information of the first AC, and the ACR information includes an identifier of the first AC.

With reference to the fifth aspect, in some implementations of the fifth aspect, when the edge enabler server EES determines that ACR for the first AC is to be performed, or ACR for the first AC is completed, the EES determines the ACR subscription status information of the first AC.

With reference to the fifth aspect, in some implementations of the fifth aspect, when the ACR subscription status information of the first AC is subscribed, the EES determines, based on the ACR subscription status information of the first AC, to send the ACR information of the first AC by using the enabler layer.

With reference to the fifth aspect, in some implementations of the fifth aspect, the ACR information includes a first type of ACR information and/or a second type of ACR information, the first type of ACR information indicates that an ACR process is completed, and the second type of ACR information indicates a target EAS determined in the ACR process.

According to a sixth aspect, a method for sending application context relocation ACR information is provided. The method includes:
an EEC sends an ACR subscription request message to an EES, where the ACR subscription request message includes an identifier of a first AC; and
an ACR information notification message that includes identification information of the first AC and that is from the EES is received.

With reference to the sixth aspect, in some implementations of the sixth aspect, after the EEC receives the ACR information notification message that includes the identification information of the first AC and that is from the EES, the method further includes:
the EEC determines an AC that needs to be transferred, and triggers a related relocation procedure.

According to a seventh aspect, an edge application server is provided. The edge application server includes a unit configured to perform the method in any possible implementation of the first aspect or the third aspect.

According to an eighth aspect, an edge enabler server is provided. The edge enabler server includes a unit configured to perform the method in any possible implementation of the second aspect, the fourth aspect, or the fifth aspect.

According to a ninth aspect, an edge enabler client is provided. The edge enabler client includes a unit configured to perform the method in any possible implementation of the sixth aspect.

According to a tenth aspect, a communication apparatus is provided, including at least one processor. A memory is configured to store a computer program. When the communication apparatus runs, the processor executes the computer program or instructions stored in the memory, so that the communication apparatus performs the method in any possible implementation of the first aspect to the sixth aspect.

The memory may be located in the processor, or may be implemented by using a chip independent of the processor. This is not specifically limited in this application.

According to an eleventh aspect, a computer-readable storage medium is provided, including a computer program. When the computer program is run on a computer, the computer is enabled to perform the method in any possible implementation of the first aspect to the sixth aspect.

According to a twelfth aspect, a chip is provided. A processing circuit is disposed on the chip, and the processing circuit is configured to perform the method in any possible implementation of the first aspect to the sixth aspect.

According to a thirteenth aspect, a computer program product is provided. The computer program product includes a computer program (or may be referred to as code or instructions). When the computer program is run, a computer is enabled to perform the method in any possible implementation of the first aspect to the sixth aspect.

### BRIEF DESCRIPTION OF DRAWINGS

FIG. 1 is an architecture of a communication system applicable to an embodiment of this application;
FIG. 2 shows a process in which an EEC subscribes to ACR information from an EES;
FIG. 3 is a schematic interaction diagram of an example of a method according to this application;
FIG. 4 is a schematic interaction diagram of another example of a method according to this application;
FIG. 5 is a schematic interaction diagram of another example of a method according to this application;
FIG. 6 is a schematic interaction diagram of another example of a method according to this application;
FIG. 7 is a schematic interaction diagram of another example of a method according to this application;
FIG. 8 is a schematic interaction diagram of another example of a method according to this application;
FIG. 9 is a schematic interaction diagram of another example of a method according to this application;
FIG. 10 is a schematic block diagram of a communication device according to this application; and
FIG. 11 is another schematic block diagram of a communication device according to this application.

### DESCRIPTION OF EMBODIMENTS

The following describes technical solutions of this application with reference to accompanying drawings.

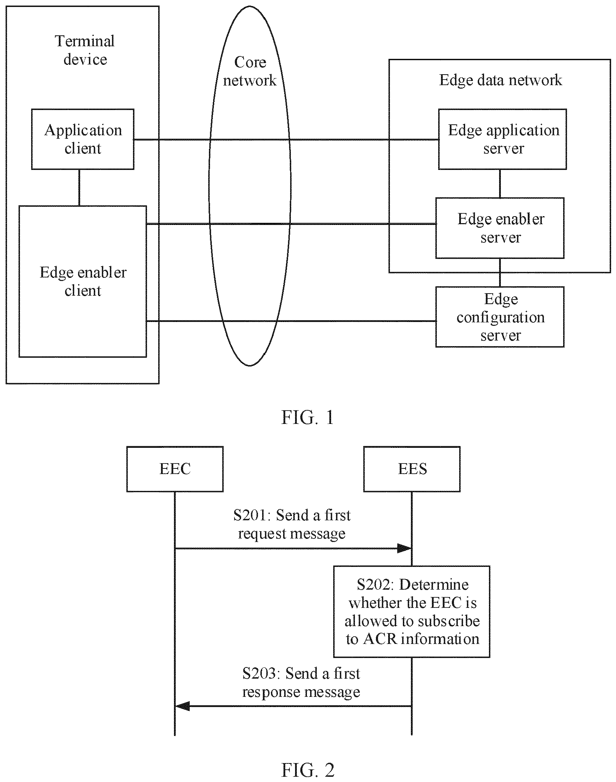

FIG. 1 is an architecture of a communication system applicable to an embodiment of this application.

The following describes some terms in this application with reference to FIG. 1.

### 1: Edge data network (edge data network, EDN)

An understanding of the EDN is that the EDN corresponds to only one data network, is a special local data network, and has an edge enabler function. This is a network logic concept. Another understanding of the EDN is that the EDN is a peer concept of a central cloud, and may be understood as a local data center, may be identified by using a data network access identifier (data network access identifier, DNAI), and may include a plurality of local data networks.

### 2: Application client (application client, AC)

The AC is a client program on a user equipment (user equipment, UE) side. The AC can connect to an application server on a cloud, to obtain an application service, or connect to an edge application server (edge application server, EAS) deployed and run in one or more EDNs, to obtain an application service.

### 3: Edge enabler client (edge enabler client, EEC)

The EEC is a peer entity of an EES on a UE side. The EEC is configured to: register information about the EEC and information about an application client with the EES, perform security authentication and authorization, obtain an IP address of an EAS from the EES, and provide an edge computing enablement capability for the application client.

### 4: Edge enabler server (edge enabler server, EES)

The EES may provide some enablement capabilities for application instances deployed in an EDN to better support application deployment on multi-access edge computing (multi-access edge computing, MEC). The EES may support registration of edge applications, and authentication and authorization for UE, provide internet protocol (internet protocol, IP) address information of the application instances for the UE, and the like. The EES may further support obtaining an identifier and IP address information of the application instance, and further send the identifier and the IP address information of the application instance to an edge configuration server. The EES is deployed in the EDN. Generally, an EAS is registered with an EES, or information about an EAS is configured on an EES by using a management system. The EES is referred to as an associated EES of the EAS.

### 5: Edge configuration server (edge configuration server, ECS)

The ECS is responsible for providing information about an EES for UE. The ECS may further directly provide information about an application instance for the UE. The ECS may further obtain the information about the application instance and information about an IP address from another functional entity and store the information.

### 6: Application context relocation (application context relocation, ACR)

In a process of running an application, when UE moves out of a current service area, an EAS (which is denoted as a source EAS) that currently provides a service may not continue to provide the service for the currently running application, or the source EAS is no longer an optimal EAS that can provide the service for the UE, and another EAS may be more suitable for providing the service for the application on the UE. Therefore, a new EAS (which is denoted as a target EAS) needs to be selected to replace the source EAS, and an application context is transferred from the source EAS to the target EAS, to ensure that the impact of application interruption is minimized.

### 7: ACR information

The ACR information in this application is information generated in an ACR process. For example, the ACR information may include a first type of ACR information and/or a second type of ACR information. The first type of ACR information indicates that the ACR process is completed, and the second type of ACR information indicates a target EAS determined in the ACR process. Alternatively, the ACR information may further include another type of information. This is not limited in this application.

The following describes a process in which an EEC subscribes to ACR information from an EES with reference to FIG. 2.

S201: The EEC sends a first request message to the EES to request to subscribe to ACR information.

In a possible implementation, the first request message includes identifiers of N ACs and a subscription requirement for ACR information of each of the N ACs. N is a positive integer.

S202: The EES determines whether the EEC is allowed to subscribe to the ACR information.

In a possible implementation, the EES determines whether the EEC is allowed to subscribe to the ACR information of each of the N ACs.

S203: When the EEC is allowed to subscribe to the ACR information, the EES sends a first response message to the EEC, where the first response message may include subscription identification information and subscription expiration time information.

When the EEC is not allowed to subscribe to the ACR information, the EES sends a first response message to the EEC, where the first response message indicates that the subscription to the ACR information is rejected.

When the EEC is allowed to subscribe to ACR information of a specified AC, the EES sends a first response message to the EEC, where the first response message indicates that the EEC is allowed to subscribe to the ACR information of the AC, and the first response message may include subscription identification information and subscription expiration time information.

When the EEC is not allowed to subscribe to ACR information of a specified AC, the EES sends a first response message to the EEC, where the first response message indicates that the subscription to the ACR information of the AC is rejected.

S204: The edge enabler server EES determines, based on a first AC identifier, whether to send an ACR information notification message to the EEC. A specific method includes: The edge enabler server EES determines whether ACR relocation needs to be performed on an EAS associated with the AC identifier, and when the relocation on the EAS associated with the AC identifier needs to be performed, it is determined to send ACR information notification information to the EEC; and/or the edge enabler server EES determines whether ACR performed on the EAS associated with the AC identifier is completed, and when the ACR performed on the EAS associated with the AC identifier is completed, it is determined to send ACR information notification information to the EEC; and/or when the EAS sends a selected target EAS statement request to the EES to notify the EEC of target EAS information (a target EAS ID and/or EAS endpoint information) that the EAS is notified to select in the ACR process, the EES determines, based on the first AC identifier, whether the EEC and the AC served by the EEC have subscribed to ACR information, which may be a target information notification message. If the AC corresponding to the first AC identifier has subscribed to the ACR message, the EES may send the ACR message including the target information notification message to the EEC (where the selected EAS information is included).

S205: When determining, based on the first AC identifier, to send the ACR information notification message to the EEC, the edge enabler server EES sends the ACR information notification message including the AC identifier to the EEC.

It should be noted that there is no strict sequence relationship between S203 and S204.

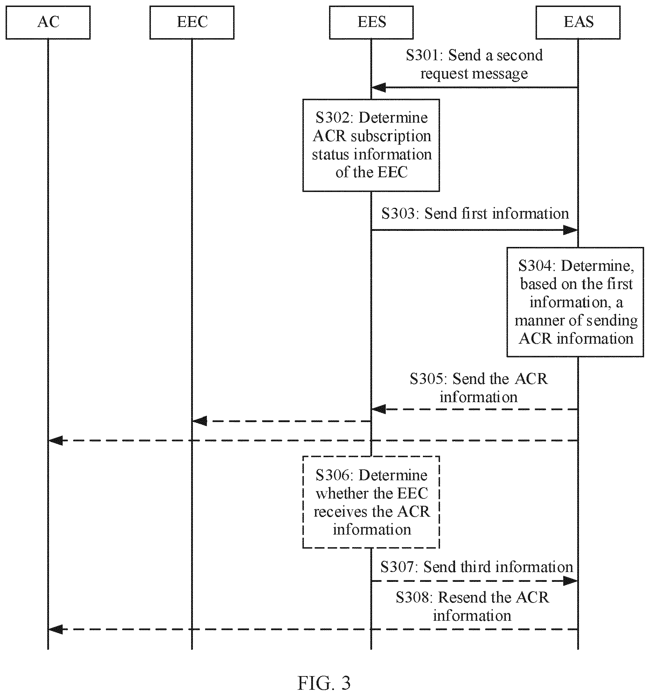

FIG. 3 shows a manner of sending ACR information according to this application.

S301: An EAS sends a second request message to an EES. Correspondingly, the EES receives the second request message.

The following describes the second request message sent by the EAS to the EES.

### Case 1:

The second request message is used to request and/or subscribe to subscription status information of ACR information of an EEC.

For example, the second information is used to subscribe to subscription status information of a first type of ACR information and/or a second type of ACR information of the EEC.

### Case 2:

The second request message is used to request and/or subscribe to a manner of sending ACR information.

### Case 3:

The second request message is used to request the EES to send ACR information by using an enabler layer. In this case, the EAS may first determine whether to send the ACR information by using the enabler layer. When the EAS determines to send the ACR information by using the enabler layer, the EAS sends the second request message to the EES.

For example, the EAS may determine, based on quality of links corresponding to the enabler layer and an application layer, whether to send the ACR information by using the enabler layer. For example, when quality of a link of the enabler layer is relatively good, the EAS determines to send the ACR information by using the enabler layer. It should be understood that, how the EAS determines whether to send the ACR information by using the enabler layer is not limited in this application.

In a possible implementation, the second request message may explicitly indicate any one of Case 1 to Case 3. For example, second information may be added to the second request message, and the second information indicates any one of Case 1 to Case 3. It should be understood that, in this case, the second request message may be an ACR-associated message, or may not be an ACR-associated message. It should be understood that the ACR-associated message is a message associated with the ACR process.

For example, when the second request message is an ACR management event subscription request message, the second information may be carried in the ACR management event subscription request message. For example, the second information is added to the ACR management event subscription request message as a newly added event identifier. Alternatively, the second information is added to an existing event identifier of the ACR management event subscription request message. This is not limited in this application.

In another possible implementation, the second request message may implicitly indicate any one of Case 1 to Case 3. In this case, the second request message is an ACR-associated message. For example, the ACR-associated message may be an ACR management event subscription request message, an automated (automated) ACR request message, or a target EAS request message. After receiving the ACR-associated message, the EES determines that the subscription status information of the ACR information of the EEC needs to be sent to the EAS, or sends information about the manner of sending the ACR information, or indicates whether to allow sending the ACR information by using the enabler layer.

In a possible implementation, the EES may further send a second response message to the EAS, where the second response message indicates that the EES successfully receives the second request message.

S302: The EES determines ACR subscription status information of the EEC.

In a possible implementation, the EES may detect whether the EEC sends the first request message in S201. Further, the EES may determine which type of ACR information is requested to be subscribed to in the first request message, and determine whether the EEC successfully subscribes to the type of ACR information.

The following describes several cases of the ACR subscription status information that is of the EEC and that is determined by the EES.

### Case 1:

The EEC does not subscribe to the ACR information, or the EEC fails to subscribe to the ACR information.

### Case 2:

The EEC successfully subscribes to the ACR information.

### Case 3:

When there are two types of ACR information, the EEC successfully subscribes to only one type of ACR information.

For example, the EEC successfully subscribes to only the first type of ACR information, but does not subscribe to the second type of ACR information or fails to subscribe to the second type of ACR information.

For another example, the EEC successfully subscribes to only the second type of ACR information, and does not subscribe to the first type of ACR information or fails to subscribe to the first type of ACR information.

S303: The EES sends first information to the EAS. Correspondingly, the EAS receives the first information. The first information is used by the EAS to determine the manner of sending the ACR information.

The following describes several cases of content included in the first information.

### Case 1:

Corresponding to Case 1 in S301, the first information is the ACR subscription status information of the EEC. It should be understood that, in this case, the first information may further implicitly indicate whether the ACR information is allowed to be sent by using the enabler layer.

When the ACR subscription status information of the EEC corresponds to Case 1 in S302, the first information may implicitly indicate that the ACR information is not allowed to be sent by using the enabler layer.

When the ACR subscription status information of the EEC corresponds to Case 2 in S302, the first information may implicitly indicate that the ACR information is allowed to be sent by using the enabler layer.

When the ACR subscription status information of the EEC corresponds to Case 3 in S302, the first information may implicitly indicate that the one type of ACR information that is successfully subscribed to is allowed to be sent by using the enabler layer.

For example, the first information may implicitly indicate that the first type of ACR information is allowed to be sent by using the enabler layer, and the second type of ACR information is not allowed to be sent by using the enabler layer; or the first information may implicitly indicate that the first type of ACR information is not allowed to be sent by using the enabler layer, and the second type of ACR information is allowed to be sent by using the enabler layer.

### Case 2:

Corresponding to Case 2 in S301, the first information indicates the manner of sending the ACR information. In this case, the EES further determines the manner of sending the ACR information based on the ACR subscription status information of the EEC determined in S302.

When the ACR subscription status information of the EEC corresponds to Case 1 in S302, the first information indicates that the manner of sending the ACR information is performing sending by using the application layer.

When the ACR subscription status information of the EEC corresponds to Case 2 in S302, the first information indicates that the manner of sending the ACR information is performing sending by using the enabler layer.

When the ACR subscription status information of the EEC corresponds to Case 3 in S302, the first information indicates that a manner of sending the one type of ACR information that is successfully subscribed to is performing sending by using the enabler layer, and a manner of sending another type of ACR information that fails to be subscribed to or that is not subscribed to is performing sending by using the application layer.

For example, the first information indicates that a manner of sending the first type of ACR information is performing sending by using the enabler layer, and a manner of sending the second type of ACR information is performing sending by using the application layer; or the first information indicates that a manner of sending the first type of ACR information is performing sending by using the application layer, and a manner of sending the second type of ACR information is performing sending by using the enabler layer.

### Case 3:

Corresponding to Case 3 in S301, the first information indicates whether the ACR information is allowed to be sent by using the enabler layer.

When the ACR subscription status information of the EEC corresponds to Case 1 in S302, the first information indicates that the ACR information is not allowed to be sent by using the enabler layer.

When the ACR subscription status information of the EEC corresponds to Case 2 in S302, the first information indicates that the ACR information is allowed to be sent by using the enabler layer.

When the ACR subscription status information of the EEC corresponds to Case 3 in S302, the first information indicates that the one type of ACR information that is successfully subscribed to is allowed to be sent by using the enabler layer, and another type of ACR information that fails to be subscribed to or is not subscribed to is not allowed to be sent by using the enabler layer.

For example, the first information indicates that the first type of ACR information is allowed to be sent by using the enabler layer, and the second type of ACR information is not allowed to be sent by using the enabler layer; or the first information indicates that the first type of ACR information is not allowed to be sent by using the enabler layer, and the second type of ACR information is allowed to be sent by using the enabler layer.

S304: The EAS determines, based on the first information, the manner of sending the ACR information.

The following describes several cases in which the EAS determines the manner of sending the ACR information based on the first information.

### Case 1:

Corresponding to Case 1 in S303, the first information is the ACR subscription status information of the EEC. In this case, the EAS determines, based on the first information, the manner of sending the ACR information.

When the ACR subscription status information of the EEC corresponds to Case 1 in S302, the EAS determines, based on the first information, that the manner of sending the ACR information is performing sending by using the application layer.

When the ACR subscription status information of the EEC corresponds to Case 2 in S302, the EAS determines, based on the first information, that the manner of sending the ACR information is performing sending by using the enabler layer.

When the ACR subscription status information of the EEC corresponds to Case 3 in S302, the EAS determines, based on the first information, that a manner of sending the one type of ACR information that is successfully subscribed to is performing sending by using the enabler layer, and a manner of sending another type of ACR information that fails to be subscribed to or that is not subscribed to is performing sending by using the application layer.

For example, the EAS determines, based on the first information, that the manner of sending the first type of ACR information is performing sending by using the enabler layer, and the manner of sending the second type of ACR information is performing sending by using the application layer; or the EAS determines, based on the first information, that the manner of sending the first type of ACR information is performing sending by using the application layer, and the manner of sending the second type of ACR information is performing sending by using the enabler layer.

### Case 2:

Corresponding to Case 2 in S303, the first information indicates the manner of sending the ACR information. In this case, the EAS determines, based on the first information, the manner of sending the ACR information.

### Case 3:

Corresponding to Case 3 in S303, the first information indicates whether the ACR information is allowed to be sent by using the enabler layer. In this case, the EAS determines, based on the first information, the manner of sending the ACR information.

When the first information indicates that the ACR information is not allowed to be sent by using the enabler layer, the EAS determines that the manner of sending the ACR information is performing sending by using the application layer.

When the first information indicates that the ACR information is allowed to be sent by using the enabler layer, the EAS determines that the manner of sending the ACR information is performing sending by using the enabler layer.

If there are two types of ACR information, when the first information indicates that the first type of ACR information is not allowed to be sent by using the enabler layer, and the second type of ACR information is allowed to be sent by using the enabler layer, the EAS determines that the manner of sending the first type of ACR information is performing sending by using the application layer, and the manner of sending the second type of ACR information is performing sending by using the enabler layer. When the first information indicates that the first type of ACR information is allowed to be sent by using the enabler layer, and the second type of ACR information is not allowed to be sent by using the enabler layer, the EAS determines that the manner of sending the first type of ACR information is performing sending by using the enabler layer, and the manner of sending the second type of ACR information is performing sending by using the application layer.

S305: The EAS sends the ACR information in the manner of sending the ACR information.

When the manner of sending the ACR information is performing sending by using the enabler layer, the EAS sends the ACR information by using the enabler layer.

When the manner of sending the ACR information is performing sending by using the application layer, the EAS sends the ACR information by using the application layer.

If there are two types of ACR information, when the manner of sending the first type of ACR information is performing sending by using the enabler layer, and the manner of sending the second type of ACR information is performing sending by using the application layer, the EAS sends the first type of ACR information by using the enabler layer, and sends the second type of ACR information by using the application layer. When the manner of sending the first type of ACR information is performing sending by using the application layer, and the manner of sending the second type of ACR information is performing sending by using the enabler layer, the EAS sends the first type of ACR information by using the application layer, and sends the second type of ACR information by using the enabler layer.

It should be understood that, in this application, the sending the ACR information by using the enabler layer means that the EAS sends the ACR information to the EES, and after receiving the ACR information, the EES further sends the ACR information to the EEC. Alternatively, the EAS sends the ACR information to the EES, and after receiving the ACR information, the EES forwards the ACR information to the EEC. Further, the EEC sends or forwards the ACR information to the AC.

It should be understood that, in this application, the sending the ACR information by using the application layer means that the EAS may directly send the ACR information to the AC.

According to the solution of this application, when sending the ACR information, the EAS may determine, based on the first information, whether to send the ACR information by using the application layer or the enabler layer. According to a current method, when an EAS sends ACR information by using an enabler layer, an EEC may not subscribe to the ACR information from an EES. In this case, the EES does not send the ACR information to the EEC after receiving the ACR information from the EAS. As a result, the ACR information fails to be sent. Therefore, according to the solution of this application, the EAS can choose to send the ACR information by using the enabler layer only when the EEC subscribes to the ACR information from the EES, so that the ACR information can be sent in a correct manner, thereby avoiding a case in which the ACR information fails to be sent.

When the EAS sends the ACR information by using the enabler layer, the method further includes: S306: The EES determines whether the EEC receives the ACR information.

It should be understood that, if there are two types of ACR information, when the first type of ACR information is sent by using the enabler layer, the EES determines whether the EEC receives the first type of ACR information; when the second type of ACR information is sent by using the enabler layer, the EES determines whether the EEC receives the second type of ACR information; or when the first type of ACR information and the second type of ACR information are sent by using the enabler layer, the EES determines whether the EEC receives the first type of ACR information and the second type of ACR information.

In a possible implementation, if the EEC receives the ACR information, the EEC may send first indication information to the EES, where the first indication information indicates that the EEC has successfully received the ACR information. For example, the first indication information is acknowledgment (acknowledge, ACK) information. If the EES receives the first indication information, the EES determines that the EEC has successfully received the ACR information. If the EES does not receive the first indication information within a preset time interval, the EES determines that the EEC does not receive the ACR information.

When the EES determines that the EEC does not receive the ACR information in S306, the method further includes: S307: The EES sends third information to the EAS. The third information indicates that the ACR information fails to be sent, or the third information indicates that the EEC fails to receive the ACR information, or the third information indicates the EAS to resend the ACR information by using the application layer. Correspondingly, the EAS receives the third information.

It should be understood that, if there are two types of ACR information, the third information indicates that the first type of ACR information and/or the second type of ACR information fails to be sent, and the third information may indicate that the EEC fails to receive the first type of ACR information and/or the second type of ACR information, or the third information may indicate the EAS to resend the first type of ACR information and/or the second type of ACR information by using the application layer.

S308: The EAS resends, based on the third information, the ACR information by using the application layer.

According to the solution of this application, when the EAS fails to send the ACR information by using the enabler layer, the EAS may resend the ACR information by using the application layer, to further ensure that the ACR information can be successfully sent to a terminal device.

In a possible implementation, the method may not include S307 and S308. When the EES determines that the EEC does not receive the ACR information in S306, the EES may send seventh information to the EEC, where the seventh information indicates that the EEC subscribes to the ACR information. Correspondingly, the EEC receives the seventh information.

The EEC subscribes to the ACR information from the EES based on the seventh information.

After the EEC successfully subscribes to the ACR information, the EES sends the ACR information to the EEC again.

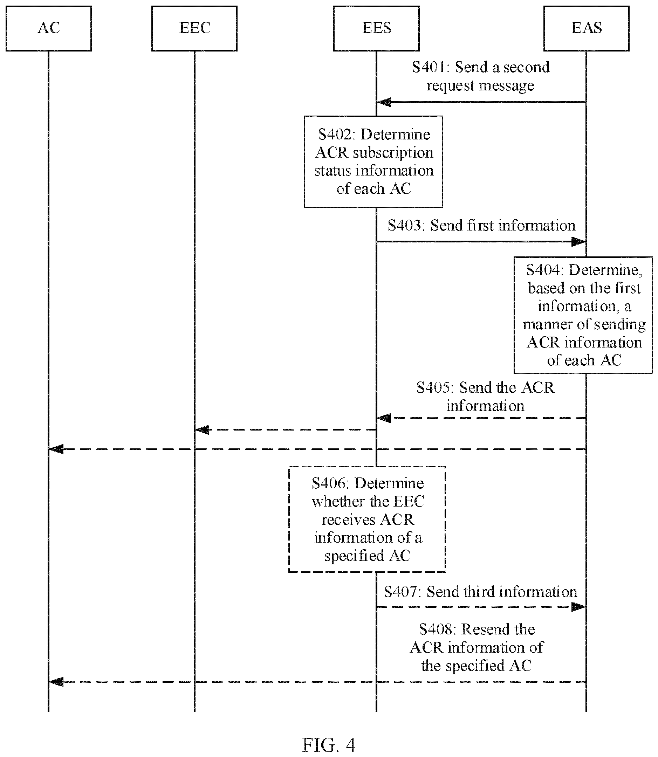

FIG. 4 shows another manner of sending ACR information according to this application. It should be understood that the method shown in FIG. 4 may be further refined by using an AC as a granularity in the method shown in FIG. 3.

S401: An EAS sends a second request message to an EES. Correspondingly, the EES receives the second request message.

The second request message includes an identifier of at least one AC.

The following describes the second request message sent by the EAS to the EES.

### Case 1:

The second request message is used to request and/or subscribe to subscription status information of ACR information corresponding to the at least one AC.

For example, the second request message is used to subscribe to subscription status information of a first type of ACR information and/or a second type of ACR information corresponding to AC#1 and AC#2.

### Case 2:

The second request message is used to request and/or subscribe to a manner of sending ACR information corresponding to the at least one AC.

For example, the second request message is used to subscribe to a manner of sending ACR information corresponding to AC#1 and AC#2.

### Case 3:

The second request message is used to request the EES to send, by using an enabler layer, ACR information corresponding to the at least one AC. In this case, the EAS may first determine whether to send the ACR information corresponding to the at least one AC by using the enabler layer. When the EAS determines to send, by using the enabler layer, the ACR information corresponding to the at least one AC, the EAS sends the second request message to the EES.

For example, the EAS may determine, based on quality of links corresponding to the enabler layer and an application layer, whether to send, by using the enabler layer, ACR information corresponding to a specified AC. For example, when quality of a link of the enabler layer is relatively good, the EAS determines to send the ACR information corresponding to the specified AC by using the enabler layer. It should be understood that how the EAS determines whether to send, by using the enabler layer, the ACR information corresponding to the specified AC is not limited in this application.

In a possible implementation, the second request message further includes explicit second information. It should be understood that, in this case, the second request message may be an ACR-associated message, or may not be an ACR-associated message. The ACR-associated message in this application is a message associated with an ACR process. The second information indicates any one of the following:
subscribing to the subscription status information of the ACR information, subscribing to the manner of sending the ACR information, and requesting for the EES to send the ACR information by using the enabler layer.

For example, the second request message may be an ACR management event subscription request message, and the second information may be carried in the ACR management event subscription request message. For example, the second information is added to the ACR management event subscription request message as a newly added event identifier. Alternatively, the second information is added to an existing event identifier of the ACR management event subscription request message. This is not limited in this application.

In another possible implementation, the second request message may alternatively implicitly indicate second information. In this case, the second request message is an ACR-associated message. For example, the ACR-associated message may be an ACR management event subscription request message, an automated (automated) ACR request message, or a target EAS request message. It should be understood that the second information may be implicitly obtained by using the ACR-associated message, and the second information indicates any one of the following:
subscribing to the subscription status information of the ACR information, subscribing to the manner of sending the ACR information, and requesting for the EES to send the ACR information by using the enabler layer.

In a possible implementation, the EES may further send a second response message to the EAS, where the second response message indicates that the EES successfully receives the second request message.

S402: The EES determines the ACR subscription status information corresponding to the at least one AC.

The following uses AC#1 (an example of a first AC) in the at least one AC as an example for description.

In a possible implementation, the EES may detect whether the first request message sent by the EEC in S201 includes an identifier of AC#1. When the first request message includes the identifier of AC#1, the EES may determine a subscription requirement for ACR information of AC#1 in the first request message. Further, the EES may determine whether the EEC is allowed to subscribe to the ACR information of AC#1.

The following describes several cases of the ACR subscription status information that is of AC#1 and that is determined by the EES.

### Case 1:

The EEC does not subscribe to the ACR information corresponding to AC#1, or the EEC fails to subscribe to the ACR information corresponding to AC#1.

### Case 2:

The EEC successfully subscribes to the ACR information corresponding to AC#1.

### Case 3:

When there are two types of ACR information, the EEC successfully subscribes to only one type of ACR information corresponding to AC#1.

For example, the EEC successfully subscribes to only a first type of ACR information corresponding to AC#1, and does not subscribe to a second type of ACR information corresponding to AC#1 or fails to subscribe to a second type of ACR information corresponding to AC#1.

For another example, the EEC successfully subscribes to only a second type of ACR information corresponding to AC#1, and does not subscribe to a first type of ACR information corresponding to AC#1 or fails to subscribe to a first type of ACR information corresponding to AC#1.

It should be understood that the EES may determine ACR subscription status information corresponding to another AC in the at least one AC by using a similar method, and details are not described herein again.

S403: The EES sends first information to the EAS. Correspondingly, the EAS receives the first information. The first information is used by the EAS to determine a manner of sending the ACR information corresponding to the at least one AC.

The following describes several cases of content included in the first information.

### Case 1:

Corresponding to Case 1 in S401, the first information includes a first correspondence, and the first correspondence is a correspondence between an identifier of the at least one AC and ACR subscription status information corresponding to the at least one AC.

For example, the first correspondence is shown in Table 1. It should be understood that Table 1 is merely an example for description.

**Table 1**

| AC identifier | ACR subscription status information |
|---|---|
| AC#1 | ACR subscription status information corresponding to AC#1 |
| AC#2 | ACR subscription status information corresponding to AC#2 |
| AC#3 | ACR subscription status information corresponding to AC#3 |

It should be understood that, in this case, the ACR subscription status information may further implicitly indicate whether the ACR information is allowed to be sent by using the enabler layer.

The following uses AC#1 in the at least one AC as an example for description.

When the ACR subscription status information corresponding to AC#1 corresponds to Case 1 in S402, the ACR subscription status information corresponding to AC#1 may implicitly indicate that the ACR information corresponding to AC#1 is not allowed to be sent by using the enabler layer.

When the ACR subscription status information corresponding to AC#1 corresponds to Case 2 in S402, the ACR subscription status information corresponding to AC#1 may implicitly indicate that the ACR information is allowed to be sent by using the enabler layer.

When the ACR subscription status information corresponding to AC#1 corresponds to Case 3 in S402, the ACR subscription status information corresponding to AC#1 may implicitly indicate that one type of ACR information that is successfully subscribed to is allowed to be sent by using the enabler layer.

For example, the ACR subscription status information corresponding to AC#1 may implicitly indicate that the first type of ACR information corresponding to AC#1 is allowed to be sent by using the enabler layer, and the second type of ACR information corresponding to AC#1 is not allowed to be sent by using the enabler layer; or the first information may implicitly indicate that the first type of ACR information corresponding to AC#1 is not allowed to be sent by using the enabler layer, and the second type of ACR information corresponding to AC#1 is allowed to be sent by using the enabler layer.

### Case 2:

Corresponding to Case 2 in S401, the first information includes a second correspondence, and the second correspondence is a correspondence between an identifier of the at least one AC and the manner of sending the ACR information corresponding to the at least one AC.

For example, the second correspondence is shown in Table 2. It should be understood that Table 2 is merely an example for description.

**Table 2**

| AC identifier | Manner of sending ACR information |
|---|---|
| AC#1 | Manner of sending ACR information corresponding to AC#1 |
| AC#2 | Manner of sending ACR information corresponding to AC#2 |
| AC#3 | Manner of sending ACR information corresponding to AC#3 |

In this case, the EES further determines, based on the ACR subscription status information corresponding to the at least one AC determined in S402, a manner of sending ACR information corresponding to each of the at least one AC.

The following uses AC#1 in the at least one AC as an example for description.

When the ACR subscription status information corresponding to AC#1 corresponds to Case 1 in S402, the EES determines that the manner of sending the ACR information corresponding to AC#1 is performing sending by using the application layer.

When the ACR subscription status information corresponding to AC#1 corresponds to Case 2 in S402, the EES determines that the manner of sending the ACR information corresponding to AC#1 is performing sending by using the enabler layer.

When the ACR subscription status information corresponding to AC#1 corresponds to Case 3 in S402, the EES determines that a manner of sending the one type of ACR information that corresponds to AC#1 and that is successfully subscribed to is performing sending by using the enabler layer, and a manner of sending another type of ACR information that corresponds to AC# 1 and that fails to be subscribed to or that is not subscribed to is performing sending by using the application layer.

For example, the EES determines that a manner of sending the first type of ACR information corresponding to AC#1 is performing sending by using the enabler layer, and a manner of sending the second type of ACR information corresponding to AC#1 is performing sending by using the application layer; or the EES determines that a manner of sending the first type of ACR information corresponding to AC#1 is performing sending by using the application layer, and a manner of sending the second type of ACR information corresponding to AC#1 is performing sending by using the enabler layer.

### Case 3:

Corresponding to Case 3 in S401, the first information includes a third correspondence, and the third correspondence is a correspondence between an identifier of the at least one AC and whether the ACR information corresponding to the at least one AC is allowed to be sent by using the enabler layer.

For example, the third correspondence is shown in Table 3. It should be understood that Table 3 is merely an example for description.

**Table 3**

| AC identifier | Whether the ACR information is allowed to be sent by using the enabler layer |
|---|---|
| AC#1 | Whether the ACR information corresponding to AC#1 is allowed to be sent by using the enabler layer |
| AC#2 | Whether ACR information corresponding to AC#2 is allowed to be sent by using the enabler layer |
| AC#3 | Whether ACR information corresponding to AC#3 is allowed to be sent by using the enabler layer |

The following uses AC#1 in the at least one AC as an example for description.

When the ACR subscription status information corresponding to AC#1 corresponds to Case 1 in S402, the first information indicates that the ACR information corresponding to AC#1 is not allowed to be sent by using the enabler layer.

When the ACR subscription status information corresponding to AC#1 corresponds to Case 2 in S402, the first information indicates that the ACR information corresponding to AC#1 is allowed to be sent by using the enabler layer.

When the ACR subscription status information corresponding to AC#1 corresponds to Case 3 in S402, the first information indicates that the one type of ACR information that corresponds to AC#1 and that is successfully subscribed to is allowed to be sent by using the enabler layer, and another type of ACR information that corresponds to AC#1 and that fails to be subscribed to or that is not subscribed to is not allowed to be sent by using the enabler layer.

For example, the first information indicates that the first type of ACR information corresponding to AC#1 is allowed to be sent by using the enabler layer, and the second type of ACR information corresponding to AC#1 is not allowed to be sent by using the enabler layer; or the first information indicates that the first type of ACR information corresponding to AC#1 is not allowed to be sent by using the enabler layer, and the second type of ACR information corresponding to AC#1 is allowed to be sent by using the enabler layer.

S404: The EAS determines, based on the first information, the manner of sending the ACR information corresponding to the at least one AC.

The following describes several cases in which the EAS determines the manner of sending the ACR information based on the first information.

### Case 1:

Corresponding to Case 1 in S403, the first information includes the first correspondence. In this case, the EAS determines, based on the first correspondence, the manner of sending the ACR information corresponding to each of the at least one AC.

The following uses AC#1 in the at least one AC as an example for description.

When the ACR subscription status information corresponding to AC#1 corresponds to Case 1 in S402, the EAS determines, based on the first correspondence, that the manner of sending the ACR information corresponding to AC#1 is performing sending by using the application layer.

When the ACR subscription status information corresponding to AC#1 corresponds to Case 2 in S402, the EAS determines, based on the first correspondence, that the manner of sending the ACR information corresponding to AC#1 is performing sending by using the enabler layer.

When the ACR subscription status information corresponding to AC#1 corresponds to Case 3 in S402, the EAS determines, based on the first correspondence, that the manner of sending one type of ACR information that corresponds to AC#1 and that is successfully subscribed to is performing sending by using the enabler layer, and the manner of sending another type of ACR information that corresponds to AC#1 and that fails to be subscribed to or that is not subscribed to is performing sending by using the application layer.

For example, the EAS determines, based on the first correspondence, that the manner of sending the first type of ACR information corresponding to AC#1 is performing sending by using the enabler layer, and the manner of sending the second type of ACR information corresponding to AC#1 is performing sending by using the application layer; or the EAS determines, based on the first correspondence, that the manner of sending the first type of ACR information corresponding to AC#1 is performing sending by using the application layer, and the manner of sending the second type of ACR information corresponding to AC#1 is performing sending by using the enabler layer.

### Case 2:

Corresponding to Case 2 in S403, the first information includes a second correspondence. In this case, the EAS determines, based on the second correspondence, the manner of sending the ACR information corresponding to each of the at least one AC.

### Case 3:

Corresponding to Case 3 in S403, the first information includes a third correspondence. In this case, the EAS determines, based on the third correspondence, the manner of sending the ACR information corresponding to each of the at least one AC.

The following uses AC#1 in the at least one AC as an example for description.

When the third correspondence indicates that the ACR information corresponding to AC#1 is not allowed to be sent by using the enabler layer, the EAS determines that the manner of sending the ACR information corresponding to AC#1 is performing sending by using the application layer.

When the third correspondence indicates that the ACR information corresponding to AC#1 is allowed to be sent by using the enabler layer, the EAS determines that the manner of sending the ACR information corresponding to AC#1 is performing sending by using the enabler layer.

If there are two types of ACR information, when the third correspondence indicates that the first type of ACR information corresponding to AC#1 is not allowed to be sent by using the enabler layer, and the second type of ACR information corresponding to AC#1 is allowed to be sent by using the enabler layer, the EAS determines that the manner of sending the first type of ACR information corresponding to AC#1 is performing sending by using the application layer, and the manner of sending the second type of ACR information corresponding to AC#1 is performing sending by using the enabler layer; or when the third correspondence indicates that the first type of ACR information corresponding to AC#1 is allowed to be sent by using the enabler layer, and the second type of ACR information corresponding to AC#1 is not allowed to be sent by using the enabler layer, the EAS determines that the manner of sending the first type of ACR information corresponding to AC#1 is performing sending by using the enabler layer, and the manner of sending the second type of ACR information corresponding to AC#1 is performing sending by using the application layer.

S405: The EAS sends the ACR information in the manner of sending the ACR information corresponding to each of the at least one AC.

The following uses AC#1 as an example for description.

When the manner of sending the ACR information corresponding to AC#1 is performing sending by using the enabler layer, the EAS sends the ACR information corresponding to AC#1 by using the enabler layer; or when the manner of sending the ACR information corresponding to AC#1 is performing sending by using the application layer, the EAS sends the ACR information corresponding to AC#1 by using the application layer. If there are two types of ACR information corresponding to AC#1, when the manner of sending the first type of ACR information corresponding to AC#1 is performing sending by using the enabler layer, and the manner of sending the second type of ACR information corresponding to AC#1 is performing sending by using the application layer, the EAS sends the first type of ACR information corresponding to AC#1 by using the enabler layer, and sends the second type of ACR information corresponding to AC#1 by using the application layer; when the manner of sending the first type of ACR information corresponding to AC#1 is performing sending by using the application layer, and the manner of sending the second type of ACR information corresponding to AC#1 is performing sending by using the enabler layer, the EAS sends the first type of ACR information corresponding to AC#1 by using the application layer, and sends the second type of ACR information corresponding to AC#1 by using the enabler layer.

It should be understood that, in this application, the sending the ACR information by using the enabler layer means that the EAS sends the ACR information to the EES, and after receiving the ACR information, the EES further sends the ACR information to the EEC. Alternatively, the EAS sends the ACR information to the EES, and after receiving the ACR information, the EES forwards the ACR information to the EEC. Further, the EEC sends or forwards the ACR information to the corresponding AC.

It should be understood that, in this application, the sending ACR information by using the application layer means that the EAS may directly send the ACR information to the corresponding AC.

According to the solution of this application, when sending ACR information, the EAS may determine, based on the first information, whether to send ACR information corresponding to a specified AC by using the application layer or the enabler layer. In comparison, when the EAS sends ACR information corresponding to a specified AC by using the enabler layer, the EEC may not subscribe to the ACR information corresponding to the AC from the EES. In this case, after receiving the ACR information corresponding to the AC from the EAS, the EES does not send the ACR information corresponding to the AC to the EEC, resulting in a failure in sending the ACR information corresponding to the AC. Therefore, by using the solution of this application, the EAS can choose to send the ACR information corresponding to the AC by using the enabler layer only when the EEC successfully subscribes to the ACR information corresponding to the AC from the EES, so that the ACR information corresponding to the AC can be sent in a correct manner, thereby avoiding a case in which the ACR information fails to be sent.

When the EAS sends, by using the enabler layer, ACR information corresponding to a specified AC, the method further includes: S406: The EES determines whether the EEC receives the ACR information corresponding to the specified AC.

The following uses AC#1 as an example for description.

It should be understood that, if there are two types of ACR information, when the first type of ACR information corresponding to AC#1 is sent by using the enabler layer, the EES determines whether the EEC receives the first type of ACR information corresponding to AC#1; when the second type of ACR information corresponding to AC#1 is sent by using the enabler layer, the EES determines whether the EEC receives the second type of ACR information corresponding to AC#1; or when the first type of ACR information and the second type of ACR information that correspond to AC#1 are sent by using the enabler layer, the EES determines whether the EEC receives the first type of ACR information and the second type of ACR information that correspond to AC#1.

In a possible implementation, if the EEC receives the ACR information corresponding to AC#1, the EEC may send first indication information to the EES, where the first indication information indicates that the EEC has successfully received the ACR information corresponding to AC#1. For example, the first indication information is acknowledgment (acknowledge, ACK) information. If the EES receives the first indication information, the EES determines that the EEC has successfully received the ACR information corresponding to AC# 1. If the EES does not receive the first indication information within a preset time interval, the EES determines that the EEC does not receive the ACR information corresponding to AC#1.

When the EES determines that the EEC does not receive the ACR information corresponding to the specified AC in S406, the method further includes: S407: The EES sends third information to the EAS. The third information includes an identifier of the AC, and the third information indicates that the ACR information corresponding to the AC fails to be sent, or the third information indicates that the EEC fails to receive the ACR information corresponding to the AC, or the third information indicates the EAS to resend, by using the application layer, the ACR information corresponding to the AC. Correspondingly, the EAS receives the third information.

The following uses AC#1 as an example for description.

It should be understood that, if there are two types of ACR information, the third information indicates that the first type of ACR information corresponding to AC#1 and/or the second type of ACR information corresponding to AC#1 fails to be sent, and the third information may indicate that the EEC fails to receive the first type of ACR information corresponding to AC# 1 and/or the second type of ACR information corresponding to AC#1, or the third information may indicate the EAS to resend the first type of ACR information corresponding to AC#1 and/or the second type of ACR information corresponding to AC#1 by using the application layer.

S408: The EAS resends, by using the application layer based on the third information, the ACR information corresponding to the specified AC.

According to the solution of this application, when the EAS fails to send the ACR information corresponding to the specified AC by using the enabler layer, the EAS may resend the ACR information corresponding to the AC by using the application layer, to further ensure that the ACR information corresponding to the AC can be successfully sent to a terminal device.

In a possible implementation, the method may not include S407 and S408. When the EES determines in S406 that the EEC does not receive the ACR information corresponding to the specified AC, the EES may send seventh information to the EEC, where the seventh information includes an identifier of the AC, and the seventh information indicates that the EEC subscribes to the ACR information corresponding to the AC. Correspondingly, the EEC receives the seventh information.

The EEC subscribes to the ACR information corresponding to the AC from the EES based on the seventh information.

After the EEC successfully subscribes to the ACR information corresponding to the AC, the EES sends the ACR information corresponding to the AC to the EEC again.

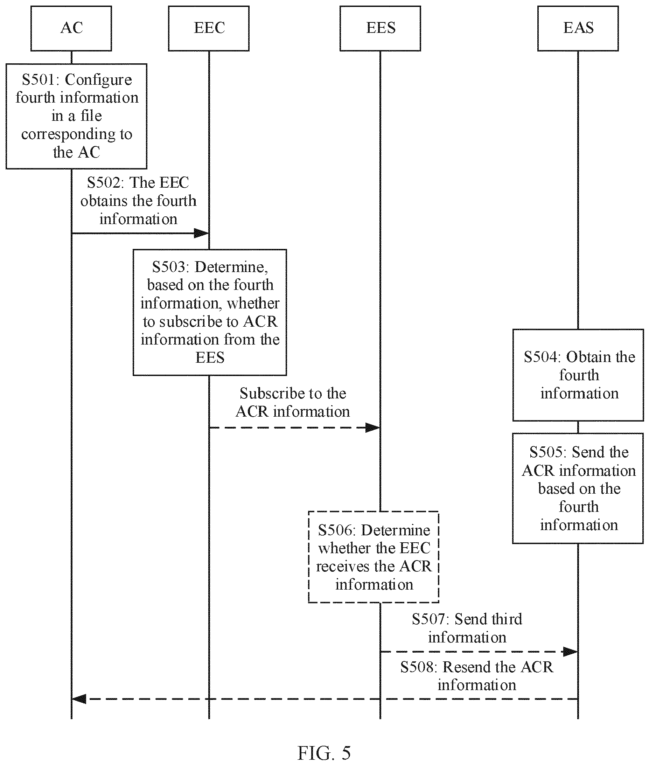

FIG. 5 shows another manner of sending ACR information according to this application.

S501: Configure fourth information in a terminal device, where the fourth information indicates a manner of sending ACR information.

In a possible implementation, the fourth information may be configured in a file corresponding to an AC in the terminal device.

S502: An EEC obtains the fourth information.

In a possible implementation, the EEC may obtain the fourth information from the file corresponding to the AC.

S503: The EEC determines, based on the fourth information, whether to subscribe to ACR information from an EES.

When the fourth information indicates that the manner of sending the ACR information is performing sending by using an application layer, the EEC does not subscribe to the ACR information from the EES.

When the fourth information indicates that the manner of sending the ACR information is performing sending by using an enabler layer, the EEC subscribes to the ACR information from the EES.

If there are two types of ACR information, when the fourth information indicates that a manner of sending a first type of ACR information is performing sending by using the enabler layer, and a manner of sending a second type ofACR information is performing sending by using the application layer, the EEC subscribes to the first type of ACR information from the EES. When the fourth information indicates that the manner of sending the first type of ACR information is performing sending by using the application layer, and the manner of sending the second type of ACR information is performing sending by using the enabler layer, the EEC subscribes to the second type of ACR information from the EES. When the fourth information indicates that both the manner of sending the first type of ACR information and the manner of sending the second type of ACR information are performing sending by using the enabler layer, the EEC subscribes to the first type of ACR information and the second type of ACR information from the EES.

For a process in which the EEC subscribes to the ACR information from the EES, refer to the descriptions in S201 to S203.

According to the solution of this application, the EEC may determine, based on the manner of sending the ACR information, whether to subscribe to the ACR information from the EES. In a current method, an EEC subscribes to ACR information from an EES, but an EAS may not send the ACR information by using an enabler layer. As a result, the EEC fails to subscribe to the ACR information from the EES, and signaling overheads are increased. Therefore, by using the solution of this application, the EEC may determine, according to an actual situation, whether to subscribe to the ACR information.

S504: An EAS obtains the fourth information.

The following describes a manner in which the EAS obtains the fourth information.

### Manner 1:

The fourth information may be preconfigured. It should be understood that, in this case, the fourth information configured in the terminal device is the same as that configured in the EAS.

### Manner 2:

In S502, after the EEC obtains the fourth information, the EEC may send the fourth information to the EES. In a possible implementation, when the EEC sends the fourth information to the EES, the fourth information may be carried in an EEC registration request message or an EAS discovery request/subscription message. Alternatively, the fourth information may be carried in another message. This is not limited in this application.

After receiving the fourth information, the EES sends the fourth information to the EAS. In a possible implementation, the EES may include the fourth information in an EAS registration response message. Alternatively, the fourth information may be carried in another message. This is not limited in this application.

S505: The EAS sends the ACR information based on the fourth information.

When the EAS sends the ACR information by using the enabler layer, the method further includes: S506: The EES determines whether the EEC receives the ACR information.

This process is the same as S306. For details, refer to the description of S306.

It should be understood that, when the EAS sends the ACR information by using the enabler layer, the EEC has subscribed to the ACR information in S503.

When the EES determines that the EEC does not receive the ACR information in S506, the method further includes: S507: The EES sends third information to the EAS. The third information indicates that the ACR information fails to be sent, or the third information indicates that the EEC fails to receive the ACR information, or the third information indicates the EAS to resend the ACR information by using the application layer. Correspondingly, the EAS receives the third information.

This process is the same as S307. For details, refer to the description of S307.

S508: The EAS resends, based on the third information, the ACR information by using the application layer.

In a possible implementation, the method may not include S507 and S508. When the EES determines that the EEC does not receive the ACR information in S506, the EES may send seventh information to the EEC, where the seventh information indicates that the EEC subscribes to the ACR information. Correspondingly, the EEC receives the seventh information.

The EEC subscribes to the ACR information from the EES based on the seventh information.

After the EEC successfully subscribes to the ACR information, the EES sends the ACR information to the EEC again.

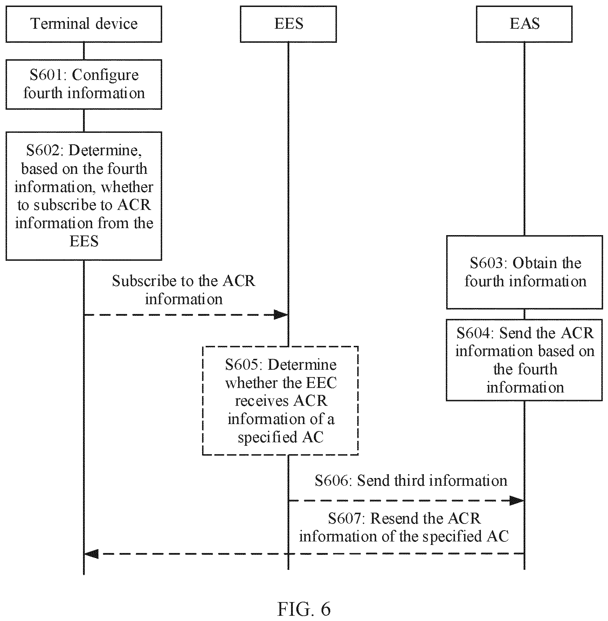

FIG. 6 shows another manner of sending ACR information according to this application. It should be understood that the method shown in FIG. 6 may be further refined by using an AC as a granularity in the method shown in FIG. 5.

S601: Configure fourth information in a terminal device, where the fourth information includes a second correspondence, and the second correspondence is a correspondence between an identifier of at least one AC and a manner of sending ACR information corresponding to the at least one AC.

For example, the second correspondence is shown in Table 2 above, and details are not described herein again.

In a possible implementation, the manner of sending ACR information corresponding to each AC may be configured in a file of each AC included in the terminal device.

S602: The terminal device determines, based on the fourth information, whether to subscribe to the ACR information from an EES.

The following uses AC#1 as an example for description.

When the second correspondence indicates that a manner of sending ACR information corresponding to AC#1 is performing sending by using an application layer, an EEC in the terminal device does not subscribe to the ACR information corresponding to AC#1 from the EES. In other words, the first request message in S201 does not include an identifier of AC#1.

When the second correspondence indicates that the manner of sending the ACR information corresponding to AC#1 is performing sending by using an enabler layer, the EEC in the terminal device subscribes to the ACR information corresponding to AC#1 from the EES. In other words, the first request message in S201 includes the identifier of AC#1.

If there are two types of ACR information, when the second correspondence indicates that a manner of sending a first type of ACR information corresponding to AC#1 is performing sending by using the enabler layer, and a manner of sending a second type of ACR information corresponding to AC#1 is performing sending by using the application layer, the EEC subscribes to the first type of ACR information corresponding to AC#1 from the EES. That is, an ACR information subscription requirement of AC#1 included in the first request message is the first type of ACR information.

When the second correspondence indicates that the manner of sending the first type of ACR information corresponding to AC#1 is performing sending by using the application layer, and the manner of sending the second type of ACR information corresponding to AC#1 is performing sending by using the enabler layer, the EEC subscribes to the second type of ACR information corresponding to AC#1 from the EES. That is, the ACR information subscription requirement of AC#1 included in the first request message is the second type of ACR information.

When the second correspondence indicates that both the manner of sending the first type of ACR information corresponding to AC#1 and the manner of sending the second type of ACR information corresponding to AC#1 are performing sending by using the enabler layer, the EEC subscribes to, from the EES, the first type of ACR information and the second type of ACR information that correspond to AC#1. That is, the ACR information subscription requirement of AC#1 included in the first request message is the first type of ACR information and the second type of ACR information.

In a possible implementation, the EEC in the terminal device may obtain, from the file of each AC, a manner of sending ACR information corresponding to the AC, and determine, based on the manner of sending the ACR information corresponding to the AC, whether to subscribe to the ACR information corresponding to the AC from the EES.

For a process in which the EEC subscribes to the ACR information from the EES, refer to the descriptions in S201 to S203.

According to the solution of this application, the EEC may determine, based on a manner of sending ACR information of a specified AC, whether to subscribe to the ACR information of the AC from the EES. In comparison, the EEC subscribes to the ACR information of the AC from the EES, but an EAS may not send the ACR information of the AC by using the enabler layer. As a result, the EEC fails to subscribe to the ACR information of the AC from the EES, and signaling overheads are increased. Therefore, by using the solution of this application, the EEC may determine, according to an actual situation, whether to subscribe to the ACR information.

S603: The EAS obtains the fourth information.

The following describes a manner in which the EAS obtains the fourth information.

### Manner 1:

The fourth information may be preconfigured. It should be understood that, in this case, the fourth information configured in the terminal device is the same as that configured in the EAS.

### Manner 2:

After the terminal device obtains the fourth information, the terminal device may send the fourth information to the EES. In a possible implementation, the fourth information may be carried in an EEC registration request message or an EAS discovery request/subscription message. Alternatively, the fourth information may be carried in another message. This is not limited in this application.

After receiving the fourth information, the EES sends the fourth information to the EAS. In a possible implementation, the EES may include the fourth information in an EAS registration response message. Alternatively, the fourth information may be carried in another message. This is not limited in this application.

S604: The EAS sends the ACR information based on the fourth information.

When the EAS sends, by using the enabler layer, ACR information corresponding to a specified AC, the method further includes: S605: The EES determines whether the EEC receives the ACR information corresponding to the specified AC.

This process is the same as S406. For details, refer to the description of S406.

It should be understood that, when the EAS sends, by using the enabler layer, ACR information corresponding to a specified AC, the EEC has subscribed to the ACR information corresponding to the AC from the EES in S602.

When the EES determines that the EEC does not receive ACR information corresponding to a specified AC in S605, the method further includes: S606: The EES sends third information to the EAS. The third information includes an identifier of the AC, and the third information indicates that the ACR information corresponding to the AC fails to be sent, or the third information indicates that the EEC fails to receive the ACR information corresponding to the AC, or the third information indicates the EAS to resend, by using the application layer, the ACR information corresponding to the AC. Correspondingly, the EAS receives the third information.

This process is the same as S407. For details, refer to the description of S407.

S607: The EAS resends, by using the application layer based on the third information, the ACR information corresponding to the specified AC.

In a possible implementation, the method may not include S607 and S608. When the EES determines in S606 that the EEC does not receive the ACR information corresponding to the specified AC, the EES may send seventh information to the EEC, where the seventh information includes an identifier of the AC, and the seventh information indicates that the EEC subscribes to the ACR information corresponding to the AC. Correspondingly, the EEC receives the seventh information.

The EEC subscribes to the ACR information corresponding to the AC from the EES based on the seventh information.

After the EEC successfully subscribes to the ACR information corresponding to the AC, the EES sends the ACR information corresponding to the AC to the EEC again.

FIG. 5 shows another manner of sending ACR information according to this application.

S701: An EES determines fourth information, where the fourth information indicates a manner of sending ACR information.

The following describes several manners in which the EES determines the fourth information.

### Manner 1:

The fourth information is preconfigured.

### Manner 2:

A terminal device sends fifth information to the EES, where the fifth information indicates an ACR information notification manner supported by the terminal device. Correspondingly, the EES receives the fifth information.

In a possible implementation, the fifth information may be carried in an EEC registration request message or an EAS discovery request/subscription message. Alternatively, the fifth information may be carried in another message. This is not limited in this application.

An EAS sends sixth information to the EES, where the sixth information indicates an ACR information notification manner supported by the EAS. Correspondingly, the EES receives the sixth information.

In a possible implementation, the sixth information may be carried in an EAS registration request message, or a subscription request message sent by the EAS to the EES. Alternatively, the sixth information may be carried in another message. This is not limited in this application.

The EES determines the fourth information based on the fifth information and the sixth information.

The following lists several cases in which the EES determines the fourth information.

### Case 1:

The fifth information indicates that the terminal device does not support sending the ACR information by using an enabler layer. The sixth information indicates that the EAS supports sending the ACR information by using the enabler layer and an application layer, or indicates that the EAS supports sending the ACR information by using an application layer. The EES determines that the ACR information is sent by using the application layer.

### Case 2:

The fifth information indicates that the terminal device supports sending the ACR information by using an enabler layer, and does not support sending the ACR information by using an application layer. The sixth information indicates that the EAS supports sending the ACR information by using the enabler layer, or indicates that the EAS supports sending the ACR information by using the enabler layer and the application layer. The EES determines that the ACR information is sent by using the enabler layer.

### Case 3:

The fifth information indicates that the terminal device supports sending the ACR information by using an enabler layer and an application layer.

The sixth information indicates that the EAS supports sending the ACR information by using the enabler layer, and the EES determines that the ACR information is sent by using the enabler layer.

Alternatively, the sixth information indicates that the EAS supports sending the ACR information by using the application layer, and the EES determines that the ACR information is sent by using the application layer.

### Case 4:

There are two types of ACR information.

The fifth information indicates that the terminal device supports sending a first type of ACR information by using an enabler layer, and does not support sending a second type of ACR information by using the enabler layer.

The sixth information indicates that the EAS does not support sending the first type of ACR information by using the enabler layer, and supports sending the second type of ACR information by using an application layer and the enabler layer, or supports sending the second type of ACR information by using an application layer. In this case, the EES determines that both the first type of ACR information and the second type of ACR information are sent by using the application layer.

Alternatively, the sixth information indicates that the EAS supports sending the first type of ACR information by using the enabler layer, supports sending the second type of ACR information by using the application layer and the enabler layer, or supports sending the second type of ACR information by using the application layer. In this case, the EES determines that the first type of ACR information is sent by using the enabler layer, and the second type of ACR information is sent by using the application layer.

### Case 5:

There are two types of ACR information.

The fifth information indicates that the terminal device does not support sending a first type of ACR information by using an enabler layer, and supports sending a second type of ACR information by using the enabler layer.

The sixth information indicates that the EAS supports sending the first type of ACR information by using an application layer and the enabler layer, or supports sending the first type of ACR information by using an application layer, and the EAS does not support sending the second type of ACR information by using the enabler layer. In this case, the EES determines that both the first type of ACR information and the second type of ACR information are sent by using the application layer.

Alternatively, the sixth information indicates that the EAS supports sending the first type of ACR information by using the application layer and the enabler layer, or supports sending the first type of ACR information by using the application layer, and supports sending the second type of ACR information by using the enabler layer. In this case, the EES determines that the first type of ACR information is sent by using the application layer, and the second type of ACR information is sent by using the enabler layer.

### Case 6:

There are two types of ACR information.

The fifth information indicates that the terminal device supports sending a first type of ACR information and a second type of ACR information by using an enabler layer.

The sixth information indicates that the EAS supports sending the first type of ACR information by using the enabler layer, and does not support sending the second type of ACR information by using the enabler layer. In this case, the EES determines that the first type of ACR information is sent by using the enabler layer, and the second type ofACR information is sent by using an application layer.

Alternatively, the sixth information indicates that the EAS does not support sending the first type of ACR information by using the enabler layer, and supports sending the second type of ACR information by using the enabler layer. In this case, the EES determines that the first type of ACR information is sent by using an application layer, and the second type of ACR information is sent by using the enabler layer.

Alternatively, the sixth information indicates that the EEC supports sending the first type of ACR information and the second type of ACR information by using the enabler layer. In this case, the EES determines that both the first type of ACR information and the second type of ACR information are sent by using the enabler layer.

S702: The EES separately sends the fourth information to the EEC and the EAS.

The following describes a manner in which the EES sends the fourth information to the EEC.

### Manner 1:

The EES receives an EAS discovery request message sent by the EEC, and the EES may include the fourth information in the EAS discovery response message.

### Manner 2:

The EES receives an EEC registration request message sent by the EEC, and the EES may include the fourth information in the EEC registration response message.

The following describes a manner in which the EES sends the fourth information to the EAS.

The EES receives an EAS registration request message sent by the EAS, and the EES may include the fourth information in the EAS registration response message.

It should be understood, the fourth information may be carried in another message. This is not limited in this application.

S703: The EEC determines, based on the fourth information, whether to subscribe to ACR information from the EES.

This process is the same as S503. For details, refer to the description of S503.

S704: The EAS sends the ACR information based on the fourth information.

When the EAS sends the ACR information by using the enabler layer, the method further includes: S705: The EES determines whether the EEC receives the ACR information.

This process is the same as S306. For details, refer to the description of S306.

When the EES determines that the EEC does not receive the ACR information in S705, the method further includes: S706: The EES sends third information to the EAS. The third information indicates that the ACR information fails to be sent, or the third information indicates that the EEC fails to receive the ACR information, or the third information indicates the EAS to resend the ACR information by using the application layer. Correspondingly, the EAS receives the third information.

This process is the same as S307. For details, refer to the description of S307.

S707: The EAS resends, based on the third information, the ACR information by using the application layer.

According to the solution of this application, the EES may determine a manner of sending the ACR information based on preconfigured information, or the EES may determine a manner of sending the ACR information based on capability information of the EEC and the EAS, and notify the EEC and the EAS of the manner of sending the ACR information, so that the EAS can send the ACR information in a correct manner, to ensure that the ACR information can be successfully sent.

In a possible implementation, the method may not include S706 and S707. When the EES determines that the EEC does not receive the ACR information in S705, the EES may send seventh information to the EEC, where the seventh information indicates that the EEC subscribes to the ACR information. Correspondingly, the EEC receives the seventh information.

The EEC subscribes to the ACR information from the EES based on the seventh information.

After the EEC successfully subscribes to the ACR information, the EES sends the ACR information to the EEC again.

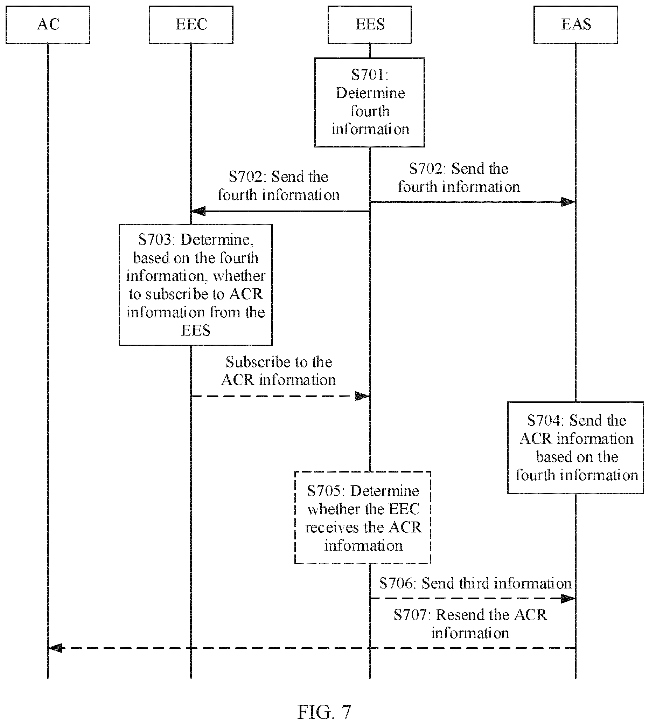

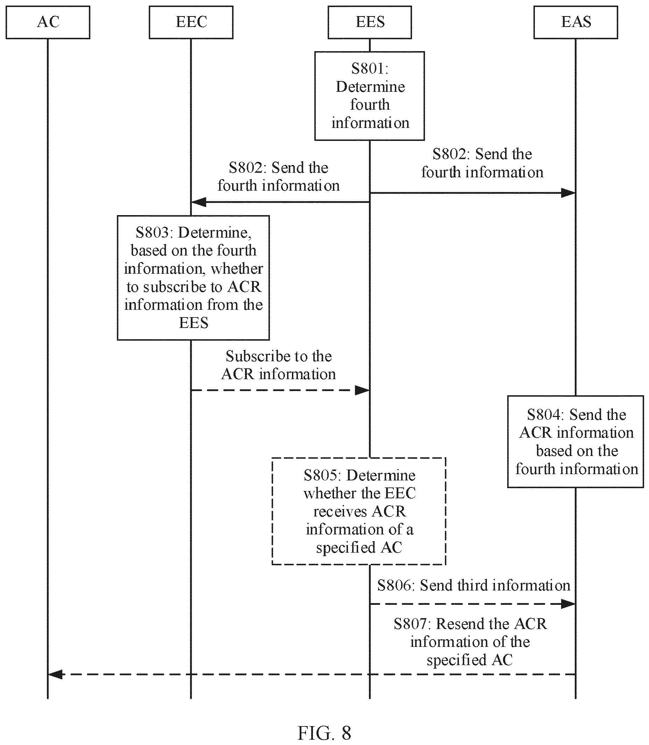

FIG. 8 shows another manner of sending ACR information according to this application. It should be understood that the method shown in FIG. 8 may be further refined by using an AC as a granularity in the method shown in FIG. 7.

S801: An EES determines fourth information, where the fourth information includes a second correspondence, and the second correspondence is a correspondence between an identifier of at least one AC and a sending manner of ACR information corresponding to each of the at least one AC.

For example, the second correspondence is shown in Table 2 above, and details are not described herein again.

The following describes several manners in which the EES determines the fourth information.

### Manner 1:

The fourth information is preconfigured.

### Manner 2:

A terminal device sends fifth information to the EES, where the fifth information includes a fourth correspondence, and the fourth correspondence is a correspondence between the identifier of the at least one AC and a notification manner that is of the ACR information of each of the at least one AC and that is supported by the terminal device. Correspondingly, the EES receives the fifth information.

For example, the fourth correspondence is shown in Table 4. It should be understood that Table 4 is merely an example for description.

**Table 4**

| AC identifier | ACR information notification manner supported by the terminal device |
|---|---|
| AC#1 | AC#1 ACR information notification manner supported by the terminal device |
| AC#2 | AC#2 ACR information notification manner supported by the terminal device |
| AC#3 | AC#3 ACR information notification manner supported by the terminal device |

In a possible implementation, the fifth information may be carried in an EEC registration request message or an EAS discovery request/subscription message. Alternatively, the fifth information may be carried in another message. This is not limited in this application.

An EAS sends sixth information to the EES, where the sixth information indicates an ACR information notification manner supported by the EAS. Correspondingly, the EES receives the sixth information.

In a possible implementation, the sixth information may be carried in an EAS registration request message, or a subscription request message sent by the EAS to the EES. Alternatively, the sixth information may be carried in another message. This is not limited in this application.

The EES determines the fourth information based on the fifth information and the sixth information.

The following uses AC#1 in the at least one AC as an example to describe several cases in which the EES determines a manner of sending ACR information corresponding to AC#1.

### Case 1:

The fifth information indicates that the terminal device does not support sending, by using an enabler layer, the ACR information corresponding to AC#1. The sixth information indicates that the EAS supports sending the ACR information by using the enabler layer and an application layer, or indicates that the EAS supports sending the ACR information by using an application layer. The EES determines that the ACR information corresponding to AC#1 is sent by using the application layer.

### Case 2:

The fifth information indicates that the terminal device supports sending, by using an enabler layer, the ACR information corresponding to AC#1, and does not support sending, by using an application layer, the ACR information corresponding to AC#1. The sixth information indicates that the EAS supports sending the ACR information by using the enabler layer, or indicates that the EAS supports sending the ACR information by using the enabler layer and the application layer. The EES determines that ACR information corresponding to AC#1 is sent by using the enabler layer.

### Case 3:

The fifth information indicates that the terminal device supports sending, by using an enabler layer and an application layer, the ACR information corresponding to AC#1.

The sixth information indicates that the EAS supports sending the ACR information by using the enabler layer, and the EES determines that the ACR information corresponding to AC# 1 is sent by using the enabler layer.

Alternatively, the sixth information indicates that the EAS supports sending the ACR information by using the application layer, and the EES determines that the ACR information corresponding to AC#1 is sent by using the application layer.

### Case 4:

There are two types of ACR information corresponding to AC#1.

The fifth information indicates that the terminal device supports sending, by using an enabler layer, a first type of ACR information corresponding to AC#1, and does not support sending, by using the enabler layer, a second type of ACR information corresponding to AC#1.

The sixth information indicates that the EAS does not support sending the first type of ACR information by using the enabler layer, and supports sending the second type of ACR information by using an application layer and the enabler layer, or supports sending the second type of ACR information by using an application layer. In this case, the EES determines that both the first type of ACR information and the second type of ACR information that correspond to AC#1 are sent by using the application layer.

Alternatively, the sixth information indicates that the EAS supports sending the first type of ACR information by using the enabler layer, supports sending the second type of ACR information by using the application layer and the enabler layer, or supports sending the second type of ACR information by using the application layer. In this case, the EES determines that the first type of ACR information corresponding to AC#1 is sent by using the enabler layer, and the second type of ACR information corresponding to AC#1 is sent by using the application layer.

### Case 5:

There are two types of ACR information corresponding to AC#1.

The fifth information indicates that the terminal device does not support sending, by using an enabler layer, a first type of ACR information corresponding to AC#1, and supports sending, by using the enabler layer, a second type of ACR information corresponding to AC#1.

The sixth information indicates that the EAS supports sending the first type of ACR information by using an application layer and the enabler layer, or supports sending the first type of ACR information by using an application layer, and the EAS does not support sending the second type of ACR information by using the enabler layer. In this case, the EES determines that both the first type of ACR information and the second type of ACR information that correspond to AC#1 are sent by using the application layer.

Alternatively, the sixth information indicates that the EAS supports sending the first type of ACR information by using the application layer and the enabler layer, or supports sending the first type of ACR information by using the application layer, and supports sending the second type of ACR information by using the enabler layer. In this case, the EES determines that the first type of ACR information corresponding to AC#1 is sent by using the application layer, and the second type of ACR information corresponding to AC#1 is sent by using the enabler layer.

### Case 6:

There are two types of ACR information corresponding to AC#1.

The fifth information indicates that the terminal device supports sending, by using an enabler layer, a first type of ACR information and a second type of ACR information that correspond to AC#1.

The sixth information indicates that the EAS supports sending the first type of ACR information by using the enabler layer, and does not support sending the second type of ACR information by using the enabler layer. In this case, the EES determines that the first type of ACR information corresponding to AC#1 is sent by using the enabler layer, and the second type of ACR information corresponding to AC#1 is sent by using an application layer.

Alternatively, the sixth information indicates that the EAS does not support sending the first type of ACR information by using the enabler layer, and supports sending the second type of ACR information by using the enabler layer. In this case, the EES determines that the first type of ACR information corresponding to AC#1 is sent by using the application layer, and the second type of ACR information corresponding to AC#1 is sent by using the enabler layer.

Alternatively, the sixth information indicates that the EEC supports sending the first type of ACR information and the second type of ACR information by using the enabler layer. In this case, the EES determines that both the first type of ACR information and the second type of ACR information that correspond to AC#1 are sent by using the enabler layer.

S802: The EES separately sends the fourth information to the terminal device and the EAS.

The following describes a manner in which the EES sends the fourth information to the terminal device.

### Manner 1:

The EES receives an EAS discovery request message sent by the EEC in the terminal device, and the EES may include the fourth information in the EAS discovery response message.

### Manner 2:

The EES receives an EEC registration request message sent by the EEC in the terminal device, and the EES may include the fourth information in the EEC registration response message.

The following describes a manner in which the EES sends the fourth information to the EAS.

The EES receives an EAS registration request message sent by the EAS, and the EES may include the fourth information in the EAS registration response message.

It should be understood, the fourth information may be carried in another message. This is not limited in this application.

S803: The terminal device determines, based on the fourth information, whether to subscribe to the ACR information from the EES.

This process is the same as S602. For details, refer to the description of S602.

S804: The EAS sends the ACR information based on the fourth information.

When the EAS sends, by using the enabler layer, ACR information corresponding to a specified AC, the method further includes: S805: The EES determines whether the EEC receives the ACR information corresponding to the specified AC.

This process is the same as S406. For details, refer to the description of S406.

When the EES determines that the EEC does not receive the ACR information corresponding to the specified AC in S805, the method further includes: S806: The EES sends third information to the EAS. The third information includes an identifier of the AC, and the third information indicates that the ACR information corresponding to the AC fails to be sent, or the third information indicates that the EEC fails to receive the ACR information corresponding to the AC, or the third information indicates the EAS to resend, by using the application layer, the ACR information corresponding to the AC. Correspondingly, the EAS receives the third information.

This process is the same as S407. For details, refer to the description of S407.

S807: The EAS resends, by using the application layer based on the third information, the ACR information corresponding to the AC.

According to the solution of this application, the EES may determine, based on preconfigured information, a manner of sending the ACR information corresponding to each of the at least one AC, or the EES may determine, based on capability information of the terminal device and the EAS, a manner of sending the ACR information corresponding to each of the at least one AC, and notify the terminal device and the EAS of the manner of sending the ACR information corresponding to each AC, so that the EAS can send the ACR information in a correct manner, to ensure that the ACR information can be successfully sent.

In a possible implementation, the method may not include S806 and S807. When the EES determines in S805 that the EEC does not receive the ACR information corresponding to the specified AC, the EES may send seventh information to the EEC, where the seventh information includes an identifier of the AC, and the seventh information indicates that the EEC subscribes to the ACR information corresponding to the AC. Correspondingly, the EEC receives the seventh information.

The EEC subscribes to the ACR information corresponding to the AC from the EES based on the seventh information.

After the EEC successfully subscribes to the ACR information, the EES sends the ACR information corresponding to the AC to the EEC again.

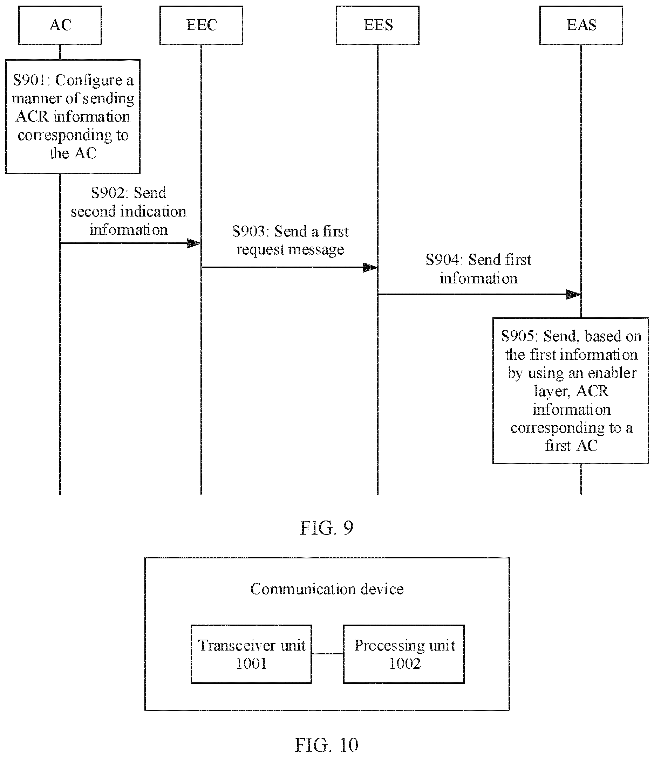

FIG. 9 shows another manner of sending ACR information according to this application.

S901: Configure a manner of sending ACR information corresponding to each AC in a file of each AC included in a terminal device.

S902: When a manner of sending ACR information corresponding to a first AC is performing sending by using an enabler layer, the first AC sends second indication information to an EEC, where the second indication information indicates that the manner of sending the ACR information corresponding to the first AC is performing sending by using the enabler layer. Correspondingly, the EEC receives the second indication information.

S903: The EEC sends a first request message to an EES based on the second indication information, to request to subscribe to the ACR information corresponding to the first AC. Correspondingly, the EES receives the first request message.

It should be understood that the first request message includes an identifier of the first AC and a subscription requirement for the ACR information of the first AC.

S904: The EES sends first information to an EAS, where the first information indicates that the manner of sending the ACR information corresponding to the first AC is performing sending by using the enabler layer. Correspondingly, the EAS receives the first information.

It should be understood that, the EES may determine, based on the first request message, that the manner of sending the ACR information corresponding to the first AC is performing sending by using the enabler layer, and then send the first information to the EAS. That is, the EES may determine the first information based on the first request message.

In a possible implementation, the first information may be carried in an ACR management time subscription notification message, or carried in an ACR information subscription status notification message, or carried in a notification message of a manner of sending ACR information, or carried in an ACR information notification response message, or carried in an EAS registration response message, or carried in an EDGE-3 subscription notification message, or carried in a notify EAS message. This is not limited in this application. The EDGE-3 subscription notification message may be an AC information notification message or a quality of service (quality of service, QoS) event session notification message.

S905: The EAS sends, based on the first information by using the enabler layer, the ACR information corresponding to the first AC.

According to the foregoing method, FIG. 10 shows a communication device according to an embodiment of this application. The communication device includes a transceiver unit 1001 and a processing unit 1002. The transceiver unit 1001 may be configured to implement receiving and sending functions in the method embodiments. Other functions in the method embodiments may be implemented by using the processing unit 1002. The transceiver unit may be implemented by using an input interface and an output interface in a data processing chip. Sending and receiving in the method embodiments respectively correspond to output and input in the chip. The transceiver unit 1001 may be further split into a receiving unit and a sending unit. The receiving unit may be configured to implement a receiving function in the method embodiments, and the sending unit may be configured to implement a sending function in the method embodiments. The receiving unit may be implemented by using the output interface in the data processing chip, and the sending unit may be implemented by using the input interface in the data processing chip. In addition, the transceiver unit and the processing unit may be implemented by using a same chip. This is not limited in this application. It should be understood that the transceiver unit 1001 in this embodiment of this application may alternatively be implemented by a transceiver (including a transmitter and a receiver) or a transceiver-related circuit component, and the processing unit 1002 may alternatively be implemented by a processor or a processor-related circuit component (or referred to as a processing circuit).

For example, when the communication device is an EAS, the transceiver unit 1001 and the processing unit 1002 can support the actions completed by the EAS in the foregoing method examples. For example, the transceiver unit 1001 may complete sending a second request message in the foregoing method embodiments and other processes in the technical solution described in this specification; and the processing unit 1002 may complete determining a manner of sending ACR information based on first information and other processes in the technical solution described in this specification.

For example, when the communication device is an EES, the transceiver unit 1001 and the processing unit 1002 can support the actions completed by the EES in the foregoing method examples. For example, the transceiver unit 1001 may complete receiving a second request message in the foregoing method embodiments and other processes in the technical solution described in this specification; and the processing unit 1002 may complete determining ACR subscription status information of an EEC and other processes in the technical solution described in this specification.

For example, when the communication device is a terminal device, the transceiver unit 1001 and the processing unit 1002 can support the actions completed by the terminal device in the foregoing method examples. For example, the transceiver unit 1001 may complete receiving ACR information in the foregoing method embodiments and other processes in the technical solutions described in this specification; and the processing unit 1002 may complete determining, based on fourth information, whether to subscribe to ACR information from an EES and other processes in the technical solutions described in this specification.

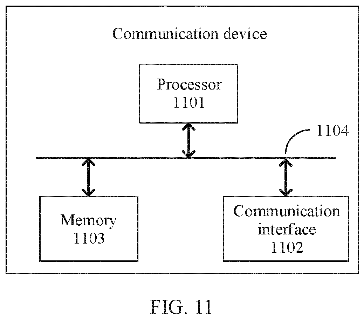

An embodiment of this application further provides a communication apparatus. As shown in FIG. 11, the communication apparatus includes a processor 1101, a communication interface 1102, and a memory 1103. The processor 1101, the communication interface 1102, and the memory 1103 may be connected to each other through a bus 1107. The bus 1107 may be a peripheral component interconnect (peripheral component interconnect, PCI) bus, an extended industry standard architecture (extended industry standard architecture, EISA) bus, or the like. The bus 1107 may be classified into an address bus, a data bus, a control bus, and the like. For ease of representation, only one bold line is used for representation in FIG. 7, but this does not mean that there is only one bus or only one type of bus. The processor 1101 may be a central processing unit (central processing unit, CPU), a network processor (network processor, NP), or a combination of the CPU and the NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof. The memory 1103 may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache.

The processor 1101 is configured to implement a data processing operation of the communication apparatus. The communication interface 1102 is configured to implement receiving and sending operations of the communication apparatus.

For example, when the communication apparatus is an EAS, the processor 1101, the communication interface 1102, and the memory 1103 can support the actions completed by the EAS in the foregoing method examples. For example, the communication interface 1102 may complete sending a second request message in the foregoing method embodiments and other processes in the technical solution described in this specification; and the processor 1101 may complete determining, based on first information, a manner of sending ACR information and other processes in the technical solution described in this specification.

For example, when the communication apparatus is an EES, the processor 1101, the communication interface 1102, and the memory 1103 can support the actions completed by the EES in the foregoing method examples. For example, the communication interface 1102 may complete receiving a second request message in the foregoing method embodiments and other processes in the technical solution described in this specification; and the processor 1101 may complete determining ACR subscription status information of an EEC and other processes in the technical solution described in this specification.

For example, when the communication apparatus is a terminal device, the processor 1101, the communication interface 1102, and the memory 1103 can support the actions completed by the terminal device in the foregoing method examples. For example, the communication interface 1102 may complete receiving ACR information in the foregoing method embodiments and other processes in the technical solution described in this specification; and the processor 1101 may complete determining, according to fourth information, whether to subscribe to ACR information from an EES and other processes in the technical solution described in this specification.

The technical solutions of embodiments of this application may be applied to various communication systems, such as a global system for mobile communications (global system of mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation (5th generation, 5G) system, or a new radio (new radio, NR) system.

The terminal device in embodiments of this application may also be referred to as user equipment, an access terminal, a subscriber unit, a subscriber station, a mobile station, a remote station, a remote terminal, a mobile device, a user terminal, a terminal, a wireless communication device, a user agent, a user apparatus, or the like. The terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, or a terminal device in a future evolved public land mobile network (public land mobile network, PLMN). This is not limited in embodiments of this application.

A person of ordinary skill in the art may be aware that, in combination with the examples described in embodiments disclosed in this specification, units and algorithm steps may be implemented by electronic hardware or a combination of computer software and electronic hardware. Whether functions are performed in a hardware or software manner depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in the embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in the form of a software product. The computer software product is stored in a storage medium and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for sending application context relocation ACR information, comprising:
determining, by an edge enabler server EES, ACR subscription status information of an edge enabler client EEC; and
determining, by the EES based on the ACR subscription status information of the EEC, whether to send ACR information by using an enabler layer.

2. The method according to claim 1, wherein the ACR subscription status information is ACR subscription status information of a first AC, the ACR information is ACR information of the first AC, and the ACR information comprises an identifier of the first AC.

3. The method according to claim 2, wherein when the edge enabler server EES determines that ACR for the first AC is to be performed or ACR for the first AC is completed, the EES determines the ACR subscription status information of the first AC.

4. The method according to claim 2, wherein when the ACR subscription status information of the first AC is subscribed, the EES determines, based on the ACR subscription status information of the first AC, to send the ACR information of the first AC by using the enabler layer.

5. The method according to any one of claims 1 to 4, wherein the ACR information comprises a first type of ACR information and/or a second type of ACR information, the first type of ACR information indicates that an ACR process is completed, and the second type of ACR information indicates a target EAS determined in the ACR process.

6. A method for sending application context relocation ACR information, comprising:
receiving, by an edge application server EAS, first information from an edge enabler server EES, wherein the first information is used by the EAS to determine a manner of sending ACR information;
determining, by the EAS based on the first information, the manner of sending the ACR information; and
sending, by the EAS, the ACR information in the manner of sending the ACR information.

7. The method according to claim 6, wherein the first information comprises an identifier of a first application client AC, and the ACR information is ACR information of the first AC.

8. The method according to claim 7, wherein
the first information comprises ACR subscription status information of the first AC; and
when the ACR subscription status information of the first AC is subscribed, a manner of sending the ACR information of the first AC is sending the ACR information by using an enabler layer; or
when the ACR subscription status information of the first AC is non-subscribed, a manner of sending the ACR information of the first AC is sending the ACR information without using an enabler layer.

9. The method according to claim 7, wherein
when the first information indicates that the ACR information of the first AC is not allowed to be sent by using an enabler layer, the EAS determines that a manner of sending the ACR information of the first AC is performing sending without using the enabler layer; or
when the first information indicates that the ACR information of the first AC is allowed to be sent by using an enabler layer, the EAS determines that a manner of sending the ACR information of the first AC is performing sending by using the enabler layer.

10. The method according to any one of claims 7 to 9, wherein
when the EAS sends the ACR information of the first AC by using the enabler layer, the method further comprises:
receiving, by the EAS, third information from the EES, wherein the third information comprises the identifier of the first AC, and the third information indicates that the ACR information of the first AC fails to be sent, or the third information indicates that an EEC fails to receive the ACR information of the first AC, or the third information indicates the EAS to send the ACR information of the first AC by using an application layer; and
sending, by the EAS based on the third information, the ACR information of the first AC by using the application layer.

11. The method according to any one of claims 7 to 10, wherein the method further comprises:
when the EAS determines to send the ACR information of the first AC by using the enabler layer, sending, by the EAS, a second request message to the EES, wherein the second request message comprises the identifier of the first AC, and the second request message is used to request to send the ACR information of the first AC by using the enabler layer.

12. The method according to any one of claims 7 to 10, wherein
the method further comprises:
sending, by the EAS, a second request message to the EES, wherein the second request message comprises the identifier of the first AC, and the second request message is used to request and/or subscribe to subscription status information of the ACR information of the first AC, or is used to request and/or subscribe to the manner of sending the ACR information of the first AC.

13. The method according to claim 7, wherein
the first information indicates that a manner of sending the ACR information of the first AC is performing sending by using an enabler layer.

14. A method for sending application context relocation ACR information, comprising:
determining, by an edge enabler server EES, ACR subscription status information of an edge enabler client EEC; and
sending, by the EES, first information to an edge application server EAS based on the ACR subscription status information, wherein the first information is used by the EAS to determine a manner of sending ACR information.

15. The method according to claim 14, wherein the ACR subscription status information is ACR subscription status information of a first AC, the first information comprises an identifier of the first AC, and the ACR information is ACR information of the first AC.

16. The method according to claim 15, wherein
the first information comprises the ACR subscription status information of the first AC; and
when the ACR subscription status information of the first AC is subscribed, the manner of sending the ACR information is performing sending by using an enabler layer; or
when the ACR subscription status information of the first AC is non-subscribed, the manner of sending the ACR information is performing sending without using an enabler layer.

17. The method according to claim 15 or 16, wherein
when the ACR information of the first AC is sent by using the enabler layer, the method further comprises:
determining, by the EES, whether the EEC successfully receives the ACR information of the first AC;
when the EEC fails to receive the ACR information of the first AC, sending, by the EES, third information to the EAS, wherein the third information indicates that the ACR information of the first AC fails to be sent, or the third information indicates that the EEC fails to receive the ACR information of the first AC, or the third information indicates the EAS to resend the ACR information of the first AC by using an application layer; and/or
when the EEC fails to receive the ACR information of the first AC, sending, by the EES, seventh information to the EEC, wherein the seventh information indicates the EEC to subscribe to the ACR information of the first AC.

18. The method according to any one of claims 15 to 17, wherein
the method further comprises:
receiving, by the EES, a second request message from the EAS, wherein the second request message comprises the identifier of the first AC, and the second request message is used to request and/or subscribe to subscription status information of the ACR information of the first AC, or is used to request and/or subscribe to a manner of sending the ACR information of the first AC, or is used to request to send the ACR information of the first AC by using the enabler layer.

19. The method according to claim 15, wherein before the ACR subscription status information of the first AC is determined, the method further comprises:
receiving, by the EES, a first request message from the EEC, wherein the first request message is used to subscribe to the ACR information of the first AC; and
the determining, by the EES, the ACR subscription status information of the first AC comprises:
determining, by the EES based on the first request message, that the ACR subscription status information of the first AC is subscribed, wherein the first information indicates that a manner of sending the ACR information of the first AC is performing sending by using an enabler layer.

20. An edge enabler server, comprising:
a processing unit, configured to determine ACR subscription status information of an edge enabler client EEC, wherein
the processing unit is further configured to determine, based on the ACR subscription status information of the EEC, whether to send ACR information by using an enabler layer.

21. The edge enabler server according to claim 20, wherein
the ACR subscription status information is ACR subscription status information of a first AC, the ACR information is ACR information of the first AC, and the ACR information comprises an identifier of the first AC.

22. The edge enabler server according to claim 21, wherein
when the processing unit determines that ACR for the first AC is to be performed or ACR for the first AC is completed, the processing unit determines the ACR subscription status information of the first AC.

23. The edge enabler server according to claim 21, wherein
when the ACR subscription status information of the first AC is subscribed, the processing unit determines, based on the ACR subscription status information of the first AC, to send the ACR information of the first AC by using the enabler layer.

24. The edge enabler server according to any one of claims 20 to 23, wherein the ACR information comprises a first type of ACR information and/or a second type of ACR information, the first type of ACR information indicates that an ACR process is completed, and the second type of ACR information indicates a target EAS determined in the ACR process.

25. An edge application server EAS, comprising:
a transceiver unit, configured to receive first information from an edge enabler server EES, wherein the first information is used by the EAS to determine a manner of sending ACR information; and
a processing unit, configured to determine, based on the first information, the manner of sending the ACR information, wherein
the transceiver unit is further configured to send the ACR information in the manner of sending the ACR information.

26. The edge application server according to claim 25, wherein
the first information comprises an identifier of a first application client AC, and the ACR information is ACR information of the first AC.

27. The edge application server according to claim 26, wherein
the first information comprises the ACR subscription status information of the first AC; and
when the ACR subscription status information of the first AC is subscribed, a manner of sending the ACR information of the first AC is sending the ACR information by using an enabler layer; or
when the ACR subscription status information of the first AC is non-subscribed, a manner of sending the ACR information of the first AC is sending the ACR information without using an enabler layer.

28. The edge application server according to claim 26, wherein
when the first information indicates that the ACR information of the first AC is not allowed to be sent by using an enabler layer, the processing unit is configured to determine that a manner of sending the ACR information of the first AC is performing sending without using the enabler layer; or
when the first information indicates that the ACR information of the first AC is allowed to be sent by using an enabler layer, the processing unit is configured to determine that a manner of sending the ACR information of the first AC is performing sending by using the enabler layer.

29. The edge application server according to any one of claims 26 to 28, wherein
when the ACR information of the first AC is sent by using the enabler layer,
the transceiver unit is further configured to receive third information from the EES, wherein the third information comprises the identifier of the first AC, and the third information indicates that the ACR information of the first AC fails to be sent, or the third information indicates that an EEC fails to receive the ACR information of the first AC, or the third information indicates the EAS to send the ACR information of the first AC by using an application layer; and
the transceiver unit is further configured to send, based on the third information, the ACR information of the first AC by using the application layer.

30. The edge application server according to any one of claims 26 to 29, wherein
when the processing unit determines to send the ACR information of the first AC by using the enabler layer, the transceiver unit is further configured to send a second request message to the EES, wherein the second request message comprises the identifier of the first AC, and the second request message is used to request to send the ACR information of the first AC by using the enabler layer.

31. The edge application server according to any one of claims 26 to 29, wherein
the transceiver unit is further configured to send a second request message to the EES, wherein the second request message comprises the identifier of the first AC, and the second request message is used to request and/or subscribe to subscription status information of the ACR information of the first AC, or is used to request and/or subscribe to the manner of sending the ACR information of the first AC.

32. The edge application server according to claim 26, wherein
the first information indicates that a manner of sending the ACR information of the first AC is performing sending by using an enabler layer.

33. An edge enabler server, comprising:
a processing unit, configured to determine ACR subscription status information of an edge enabler client EEC; and
a transceiver unit, configured to send first information to an edge application server EAS based on the ACR subscription status information, wherein the first information is used by the EAS to determine a manner of sending ACR information.

34. The edge enabler server according to claim 33, wherein
the ACR subscription status information is ACR subscription status information of a first AC, the first information comprises an identifier of the first AC, and the ACR information is ACR information of the first AC.

35. The edge enabler server according to claim 34, wherein
the first information comprises the ACR subscription status information of the first AC; and
when the ACR subscription status information of the first AC is subscribed, the manner of sending the ACR information is performing sending by using an enabler layer; or
when the ACR subscription status information of the first AC is non-subscribed, the manner of sending the ACR information is performing sending without using an enabler layer.

36. The edge enabler server according to claim 34, wherein
when the ACR information of the first AC is sent by using an enabler layer,
the processing unit is configured to determine whether the EEC successfully receives the ACR information of the first AC;
when the EEC fails to receive the ACR information of the first AC, the transceiver unit is further configured to send third information to the EAS, wherein the third information indicates that the ACR information of the first AC fails to be sent, or the third information indicates that the EEC fails to receive the ACR information of the first AC, or the third information indicates the EAS to resend the ACR information of the first AC by using an application layer; and/or
when the EEC fails to receive the ACR information of the first AC, the transceiver unit is further configured to send seventh information to the EEC, wherein the seventh information indicates the EEC to subscribe to the ACR information of the first AC.

37. The edge enabler server according to any one of claims 34 to 36, wherein
the transceiver unit is further configured to receive a second request message from the EAS, wherein the second request message comprises the identifier of the first AC, and the second request message is used to request and/or subscribe to subscription status information of the ACR information of the first AC, or is used to request and/or subscribe to a manner of sending the ACR information of the first AC, or is used to request to send the ACR information of the first AC by using the enabler layer.

38. The edge enabler server according to claim 34, wherein
the transceiver unit is further configured to receive a first request message from the EEC, wherein the first request message is used to subscribe to the ACR information of the first AC; and
that the processing unit is configured to determine the ACR subscription status information of the first AC comprises:
the processing unit determines, based on the first request message, that the ACR subscription status information of the first AC is subscribed, wherein the first information indicates that a manner of sending the ACR information of the first AC is performing sending by using an enabler layer.

39. A communication device, comprising a processor and a memory, wherein the processor is configured to execute a computer program or instructions stored in the memory, so that the communication device performs the method according to any one of claims 1 to 5, or
the communication device performs the method according to any one of claims 6 to 13, or
the communication device performs the method according to any one of claims 14 to 19.

40. A computer-readable storage medium, comprising a computer program or instructions, wherein when the computer program or the instructions are run on a computer,
the computer is enabled to perform the method according to any one of claims 1 to 5, or
the computer is enabled to perform the method according to any one of claims 6 to 13, or
the computer is enabled to perform the method according to any one of claims 14 to 19.

41. A chip system, comprising at least one processor, wherein the processor is configured to execute a computer program or instructions in a memory,
so that the method according to any one of claims 1 to 5 is implemented, or
the method according to any one of claims 6 to 13 is implemented, or
the method according to any one of claims 14 to 19 is implemented.
